# EUROPEAN PATENT APPLICATION

(11) **EP 4 262 258 A1**
(43) Date of publication of application: **18.10.2023**
(21) Application number: 20966652.8
(22) Date of filing: 25.12.2020
(51) Int. Cl.: H04W 12/06

(54) **METHOD AND APPARATUS FOR GENERATING SECURITY CONTEXT, AND COMPUTER-READABLE STORAGE MEDIUM**

(71) Applicant: Huawei Technologies Co., Ltd., Shenzhen, Guangdong 518129 (CN)
(72) Inventor: HU, Li, Shenzhen, Guangdong 518129 (CN); WU, Rong, Shenzhen, Guangdong 518129 (CN)
(74) Representative: Huawei European IPR
(86) International application number: PCT/CN2020/139666
(87) International publication number: WO 2022/134089

(57) **Abstract**

Embodiments of the present invention disclose a security context generation method and apparatus, and a computer-readable storage medium. The method includes: A terminal device obtains a first security context, where the first security context is for protecting a first communication service of the terminal device; the terminal device sends a session request message to a session management function network element, where the session request message is for requesting to establish a session of a second communication service, and the second communication service is different from the first communication service; the terminal device receives a session accept message from the session management function network element, where the session accept message is for completing establishment of the session of the second communication service; the terminal device obtains an additional generation indication; and the terminal device obtains a second security context based on the additional generation indication, where the second security context is for protecting the second communication service. According to embodiments of the present invention, different communication services are protected by using different security contexts, so that security of the communication services can be improved.

## Description

### TECHNICAL FIELD

Embodiments of this application relate to the field of communication technologies, and in particular, to a security context generation method and apparatus, and a computer-readable storage medium.

### BACKGROUND

A public network is a communication network constructed by a network service provider and used by public users. To meet requirements of individual, enterprise, and corporate users for network resources, carriers can allocate some network resources to these users to form a private network. The private network formed in this case may be referred to as a public network integrated non-public network (public network integrated non-public network, PNI-NPN). In the PNI-NPN, user equipment (user equipment, UE) may be connected to a public land mobile network (public land mobile network, PLMN) to process a public network service, or may be connected to a non-public network (non-public network, NPN)/private network to process a private network service. Currently, the UE may be connected to a same radio access network (radio access network, RAN) to perform both a public network service and a private network service. In this case, the public network service and the private network service use a same security context for communication. When an attacker cracks a security context for the public network service, the attacker obtains the security context corresponding to the private network service. Conversely, when the attacker obtains an algorithm for the private network service, the attacker obtains a security context corresponding to the private network service. Therefore, a security attack on a public network service or a private network service may affect a corresponding private network service or a corresponding public network service. This reduces security of a communication service.

### SUMMARY

Embodiments of the present invention disclose a security context generation method and apparatus, and a computer-readable storage medium, to improve security of a communication service.

According to a first aspect, a security context generation method is disclosed. The security context generation method may be applied to a terminal device, or may be applied to a module (for example, a chip) in the terminal device. The following uses the terminal device as an example for description. The security context generation method may include: The terminal device obtains a first security context, where the first security context is for protecting a first communication service of the terminal device; the terminal device sends a session request message to a session management function network element, where the session request message is for requesting to establish a session of a second communication service, and the second communication service is different from the first communication service; the terminal device receives a session accept message from the session management function network element, where the session accept message is for completing establishment of the session of the second communication service; the terminal device obtains an additional generation indication; and the terminal device obtains a second security context based on the additional generation indication, where the second security context is for protecting the second communication service.

In this embodiment of this application, the terminal device may further obtain the second security context based on obtaining of the first security context. The first security context and the second security context may be respectively for protecting different communication services. In this way, protection of different services may be isolated, to prevent another communication service from being affected when one communication service is attacked, thereby improving security of communication services.

In a possible implementation, the session request message includes first indication information, and the first indication information indicates that the terminal device supports generation of the second security context.

In this embodiment of this application, when the session request message includes the first indication information, the session management function network element may directly determine the second security context based on the indication information, so that a processing process of the session management function network element can be simplified, and generation efficiency of the second security context can be improved.

In a possible implementation, that the terminal device obtains a second security context based on the additional generation indication includes: The terminal device obtains a security key based on the additional generation indication and a first key; and/or the terminal device obtains a security algorithm based on the additional generation indication.

In this embodiment of this application, a security context may include a security key and/or a security algorithm. The security context may be for performing encryption protection and integrity protection on data, to ensure security and reliability of data in a communication service.

In a possible implementation, that the terminal device obtains a security key based on the additional generation indication and a first key includes: The terminal device obtains the first key based on the additional generation indication and an access stratum (access stratum, AS) root key of the first security context; and the terminal device generates the security key based on the first key.

In this embodiment of this application, when generating the security key, the terminal device may generate the first key by using the AS root key for generating the first security context. Because the AS root key is known and does not need to be generated, a process of generating the second security context can be simplified, thereby improving efficiency of generating the second security context.

In a possible implementation, the additional generation indication includes an indication of a first derivative parameter, and that the terminal device obtains the first key based on the additional generation indication and an AS root key of the first security context includes: The terminal device generates the first key based on the AS root key of the first security context and the first derivative parameter.

In this embodiment of this application, the first key is generated based on the first derivative parameter, and different first derivative parameters lead to different generated keys. Therefore, a security key included in the second security context can be prevented from being the same as a security key included in the first security context. This can ensure that security contexts used for different communication services are different, thereby ensuring effective security isolation and improving security of the communication services.

In a possible implementation, the first derivative parameter is a downlink packet data convergence protocol (packet data convergence protocol, PDCP) count (COUNT), and the indication of the first derivative parameter is some bits of the downlink PDCP count.

In this embodiment of this application, when the first derivative parameter is the downlink PDCP count, a corresponding count value may change as a quantity of times of generating a security context continuously changes. The change of the count value can prevent generated first keys from being the same, to prevent generated security keys from being the same. Therefore, it can be ensured that generated security contexts are different. Different security contexts are for protecting different communication services, to ensure effective security isolation of the communication services, so that security of the communication services can be improved.

In a possible implementation, after the terminal device sends the session request message to the session management function network element, and before the terminal device receives the additional generation indication, the security context generation method further includes: The terminal device performs secondary authentication; and the terminal device generates a secondary authentication key in a process of performing the secondary authentication. That the terminal device obtains a security key based on the additional generation indication and a first key includes: The terminal device obtains the first key based on the additional generation indication and the secondary authentication key; and the terminal device generates the security key based on the first key.

In this embodiment of this application, the terminal device may perform secondary authentication, and then may generate the first key by using the authentication key obtained through the secondary authentication. Because first keys generated by using different authentication keys are different, a security key included in the second security context generated by using the first key is also different from a security key included in the first security context, to ensure that generated security contexts are different. Different security contexts are for protecting different communication services, to ensure effective security isolation of the communication services, so that security of the communication services can be improved.

In a possible implementation, the additional generation indication includes an indication of a second derivative parameter, and that the terminal device obtains the first key based on the additional generation indication and the secondary authentication key includes: The terminal device generates the first key based on the indication of the second derivative parameter, the secondary authentication key, and the second derivative parameter.

In this embodiment of this application, the terminal device may generate the first key based on the second derivative parameter. Different second derivative parameters lead to different generated first keys. Therefore, a security key included in the generated second security context can be prevented from being the same as a security key included in the first security context, to ensure that security contexts used for different communication services are different, thereby ensuring effective security isolation and improving security of the communication services.

In a possible implementation, the second derivative parameter is one or more of the following parameters: a downlink non-access stratum (non-access stratum, NAS) count (COUNT), a protocol data unit (protocol data unit, PDU) session (session) identity (identity document, ID), network slice selection assistance information (network slice selection assistance information, NSSAI), and a data network name (data network name, DNN).

In this embodiment of this application, when a NAS count is used as a parameter for deriving the first key, because a count value for each time of derivation changes, a derived first key may be different. When the PDU session ID, the NSSAI, or the DNN is used as a parameter for deriving the first key, different PDU sessions of the terminal device, accessed slices, and data networks may lead to different derived first keys. Different first keys may be for generating different security keys, and different security keys may ensure that generated security contexts are different. Different security contexts may be for protecting different communication services, to ensure effective security isolation of the communication services, so that security of the communication services can be improved.

In a possible implementation, that the terminal device generates the security key based on the first key includes: The terminal device generates the security key based on the first key and a third derivative parameter.

In this embodiment of this application, the terminal device may generate the security key based on the first key and the third derivative parameter. Different third derivative parameters lead to different generated security keys. Therefore, this can prevent the generated security key from being the same as an existing security key, to ensure that generated security contexts are different. Different communication services are protected by using different security contexts, to ensure effective security isolation of the communication services, so that security of the communication services can be improved.

In a possible implementation, the additional generation indication includes an identifier of the security algorithm, and that the terminal device generates the security key based on the first key and a third derivative parameter includes: The terminal device generates the security key based on the first key and the identifier and a type of the security algorithm.

In this embodiment of this application, because both a type and a length of the security key in the second security context are determined, the security key may be determined based on the identifier and the type of the corresponding security algorithm, to ensure effectiveness of generating the security key.

In a possible implementation, the additional generation indication includes an identifier of the security algorithm.

In this embodiment of this application, after obtaining the identifier of the security algorithm, the terminal device may directly determine the security algorithm based on the identifier, so that consistency of security algorithms generated by the terminal device and a data transmission network element can be ensured, a process of determining the security algorithm by the terminal device can be simplified, and security context generation efficiency can be improved.

In a possible implementation, when the first communication service is a public network service, the second communication service is a private network service; and when the first communication service is a private network service, the second communication service is a public network service.

In this embodiment of this application, the first communication service and the second communication service are different communication services. When one communication service is a private network service, and the other communication service is a public network service, it can be ensured that different communication services are protected by using different security contexts, and security isolation between the public network service and the private network service can be ensured, thereby improving security of the public network service and the private network service.

According to a second aspect, a security context generation method is disclosed. The security context generation method may be applied to a session management function network element, or may be applied to a module (for example, a chip) in the session management function network element. The following uses the session management function network element as an example for description. The security context generation method may include: The session management function network element receives a session request message to a terminal device, where the session request message is for requesting to establish a session of a second communication service; the session management function network element sends an additional security context indication to a data transmission network element, where the additional security context indication indicates that to generate a second security context, and the second security context is for protecting the second communication service; and the session management function network element sends a session accept message to the terminal device, where the session accept message is for completing establishment of the session of the second communication service.

In this embodiment of this application, after receiving the session request message, the session management function network element may respond to a request for generating the second security context. The session management function network element sends the additional security context indication, and the data transmission network element may generate the second security context based on the additional security context indication. The session management function network element may coordinate the terminal device and the data transmission network element to generate the second security context, to ensure generation of the second security context.

In a possible implementation, the session request message includes first indication information, and the first indication information indicates that the terminal device supports generation of the second security context. That the session management function network element sends an additional security context indication to a data transmission network element includes: When the first indication information indicates that the terminal device supports generation of the second security context, the session management function network element sends the additional security context indication to the data transmission network element.

In this embodiment of this application, when the session request message includes the first indication information, the session management function network element may directly determine, based on the indication information, to generate the second security context, so that a processing process of the session management function network element can be simplified, and generation efficiency of the second security context can be improved.

In a possible implementation, that the session management function network element sends the additional security context indication to the data transmission network element includes: The session management function network element obtains subscription information of the terminal device based on the session request message; and when the subscription information of the terminal device indicates that the second security context needs to be generated, the session management function network element sends the additional security context indication to the data transmission network element.

In this embodiment of this application, the session management function network element may alternatively determine, based on the subscription information, whether to send the additional security context indication. In this case, the session request message may not carry the indication information for determining whether to generate the second security context, so that information transmission can be reduced and communication resources can be saved.

In a possible implementation, that the session management function network element sends the additional security context indication to the data transmission network element includes: When a local policy configured by the session management function network element indicates that the second security context needs to be generated, the session management function network element sends the additional security context indication to the data transmission network element.

In this embodiment of this application, the session management function network element may determine, according to the local policy, whether to send the additional security context indication. In this case, the session request message may not carry the indication information for determining whether to generate the second security context, so that information transmission can be reduced and communication resources can be saved.

In a possible implementation, the additional security context indication includes an identifier of a security algorithm, and the method further includes: The session management function network element obtains the security algorithm.

In this embodiment of this application, after the session management function network element may determine the security algorithm, the terminal device and the data transmission network element may receive the identifier of the security algorithm determined by the session management function network element, and the terminal device and the data transmission network element may directly determine the security algorithm based on the identifier, to simplify a process of determining the security algorithm by the terminal device and the data transmission network element and save processing resources, thereby improving security context generation efficiency.

In a possible implementation, the additional security context indication includes a first key, and the method further includes: The session management function network element triggers secondary authentication; after the secondary authentication succeeds, the session management function network element receives a secondary authentication key from an authentication, authorization, and accounting network element; the session management function network element obtains the first key based on the secondary authentication key.

In this embodiment of this application, the session management function network element may trigger the secondary authentication to obtain the authentication key, and then may generate the first key by using the authentication key obtained through the secondary authentication. Because first keys generated by using different authentication keys are different, a security key included in the second security context generated by using the first key is also different from a security key included in the first security context, to ensure that generated security contexts are different. Different security contexts are for protecting different communication services, to ensure effective security isolation of the communication services, so that security of the communication services can be improved.

In a possible implementation, that the session management function network element obtains the first key based on the secondary authentication key includes: The session management function network element obtains the first key based on the secondary authentication key and a second derivative parameter.

In this embodiment of this application, the session management function network element may generate the first key based on the second derivative parameter. Different second derivative parameters lead to different generated first keys. Therefore, a security key included in the generated second security context can be prevented from being the same as a security key included in the first security context, to ensure that security contexts used for different communication services are different. This can ensure effective security isolation of the communication services, so that security of the communication services can be improved.

In a possible implementation, the second derivative parameter is one or more of the following parameters: a downlink NAS count, a PDU session ID, NSSAI, and a DNN.

In this embodiment of this application, when a NAS count is used as a parameter for deriving the first key, because a count value for each time of derivation changes, a derived first key may be different. When one of the PDU session ID, the NSSAI, and the DNN is used as a parameter for deriving the first key, different PDU sessions of the terminal device, accessed slices, and data networks may lead to different derived first keys. Different first keys may be for generating different security keys, and different security keys may ensure that generated security contexts are different. Different security contexts may be for protecting different communication services, to ensure effective security isolation of the communication services, so that security of the communication services can be improved.

In a possible implementation, the session accept message includes an indication of the second derivative parameter, and the indication of the second derivative parameter indicates that a security key is obtained based on the secondary authentication key.

In this embodiment of this application, when the session management function network element receives the indication of the second derivative parameter, the session management function network element may generate the first key based on the secondary authentication key and the second derivative parameter. Generated security keys are different due to different second derivative parameters. Therefore, generated security contexts may be different. Different security contexts can ensure effective security isolation of communication services, so that security of communication services can be improved.

According to a third aspect, a security context generation method is disclosed. The security context generation method may be applied to a data transmission network element, or may be applied to a module (for example, a chip) in the data transmission network element. The following uses the data transmission network element as an example for description. The security context generation method may include: The data transmission network element receives an additional security context indication from a session management function network element; the data transmission network element obtains a second security context based on the additional security context indication, where the second security context is for protecting a second communication service; and the data transmission network element sends an additional generation indication to a terminal device, where the additional generation indication indicates to generate the second security context.

In this embodiment of this application, the data transmission network element may obtain the second security context, and the second security context may be for protecting the second communication service, so that security of the second communication service can be improved.

In a possible implementation, that the data transmission network element obtains a second security context based on the additional security context indication includes: The data transmission network element obtains a security key based on the additional security context indication and a first key; and/or the data transmission network element obtains a security algorithm based on the additional security context indication.

In this embodiment of this application, a security context may include a security key and/or a security algorithm. The security context may be for performing encryption protection and integrity protection on data, to ensure security and reliability of data in a communication service.

In a possible implementation, before the data transmission network element receives the additional security context indication from the session management function network element, the security context generation further includes: The data transmission network element obtains a first security context, where the first security context is for protecting a first communication service, and the first communication service is different from the second communication service.

In this embodiment of this application, the data transmission network element may further obtain the second security context based on obtaining of the first security context. The first security context and the second security context may be respectively for protecting different communication services. In this way, protection of different services may be isolated, to prevent another communication service from being affected when one communication service is attacked, thereby improving security of communication services.

In a possible implementation, that the data transmission network element generates a security key based on the additional security context indication and a first key includes: The data transmission network element obtains the first key based on the additional security context indication and an AS root key of the first security context; and the data transmission network element generates the security key based on the first key.

In this embodiment of this application, when generating the security key, the data transmission network element may generate the first key by using the AS root key for generating the first security context. Because the AS root key is known and does not need to be generated, a process of generating the second security context can be simplified, thereby improving efficiency of generating the second security context.

In a possible implementation, the additional generation indication includes an indication of a first derivative parameter, and that the data transmission network element obtains the first key based on the additional security context indication and an AS root key of the first security context includes: The data transmission network element generates the first key based on the AS root key of the first security context and the first derivative parameter.

In this embodiment of this application, the first key is generated based on the first derivative parameter, and different first derivative parameters lead to different generated first keys. Therefore, a security key included in the generated second security context can be prevented from being the same as a security key included in the first security context. This can ensure that security contexts used for different communication services are different, thereby ensuring effective security isolation and improving security of the communication services.

In a possible implementation, the first derivative parameter is a downlink PDCP count, and the indication of the first derivative parameter is some bits of the downlink PDCP count.

In this embodiment of this application, when the first derivative parameter is the downlink PDCP count, a corresponding count value may change as a quantity of times of generating a security context continuously changes. The change of the count value can prevent generated first keys from being the same, to prevent generated security keys from being the same. Therefore, it can be ensured that generated security contexts are different. Different security contexts are for protecting different communication services, to ensure effective security isolation of the communication services, so that security of the communication services can be improved.

In a possible implementation, the additional security context indication includes the first key, and that the data transmission network element obtains a security key based on the additional security context indication and a first key includes: The data transmission network element generates the security key based on the first key.

In this embodiment of this application, the data transmission network element may generate the security key based on the received first key, where the first key may be a key generated by the session management function network element based on an authentication key for secondary authentication. Because first keys generated by using different authentication keys are different, a security key included in the second security context generated by using the first key is also different from a security key included in the first security context, to ensure that generated security contexts are different. Different security contexts are for protecting different communication services, to ensure effective security isolation of the communication services, so that security of the communication services can be improved.

In a possible implementation, that the data transmission network element generates the security key based on the first key includes: The data transmission network element generates the security key based on the first key and a third derivative parameter.

In this embodiment of this application, the data transmission network element may generate the security key based on the first key and the third derivative parameter. Different third derivative parameters lead to different generated security keys. Different communication services are protected by using different security contexts, to ensure effective security isolation of the communication services, so that security of the communication services can be improved.

In a possible implementation, the additional security context indication includes an identifier of the security algorithm, and that the data transmission network element generates the security key based on the first key and a third derivative parameter includes: The data transmission network element generates the security key based on the first key and the identifier and a type of the security algorithm.

In this embodiment of this application, because both a type and a length of the security key in the second security context are determined, the security key may be determined based on the identifier and the type of the corresponding security algorithm, to ensure effectiveness of generating the security key.

In a possible implementation, the additional generation indication includes an identifier of the security algorithm.

In this embodiment of this application, after obtaining the identifier of the security algorithm, the terminal device may directly determine the security algorithm based on the identifier, so that consistency of security algorithms generated by the terminal device and a data transmission network element can be ensured, a process of determining the security algorithm by the data transmission network element can be simplified, and security context generation efficiency can be improved. In addition, the data transmission network element may determine the security algorithm, and the identifier of the security algorithm.

In a possible implementation, the additional security context indication includes an identifier of the security algorithm.

In this embodiment of this application, after obtaining the identifier of the security algorithm, the data transmission network element may directly determine the security algorithm based on the identifier, so that consistency of security algorithms generated by the terminal device and the data transmission network element can be ensured, a process of determining the security algorithm by the data transmission network element can be simplified, and security context generation efficiency can be improved.

In a possible implementation, that the data transmission network element obtains a security algorithm based on the additional security context indication includes: The data transmission network element obtains the security algorithm based on the additional security context indication, a security capability of the terminal device, and a preconfigured algorithm priority list, where the security capability of the terminal device indicates all security algorithms supported by the terminal device.

In this embodiment of this application, the data transmission network element may obtain the security algorithm based on the corresponding security capability of the terminal device and the preconfigured algorithm priority list. The algorithm priority list is preconfigured by the data transmission network element. A corresponding terminal device may preconfigure a security algorithm corresponding to the data transmission network element. The data transmission network element may determine, by using the algorithm priority list, security algorithms corresponding to all terminal devices. When a terminal device is under a security attack, a security algorithm corresponding to the terminal device may be disclosed, but security algorithms of all terminal devices are not disclosed, so that security of communication services of different terminal devices can be improved.

In a possible implementation, when the first communication service is a public network service, the second communication service is a private network service; and when the first communication service is a private network service, the second communication service is a public network service.

In this embodiment of this application, the first communication service and the second communication service are different communication services. When one communication service is a private network service, and the other communication service is a public network service, it can be ensured that different communication services are protected by using different security contexts, and security isolation between the public network service and the private network service can be ensured, thereby improving security of the public network service and the private network service.

According to a fourth aspect, a security context generation apparatus is disclosed. The security context generation apparatus may be a terminal device, or may be a module (for example, a chip) in the terminal device. The apparatus may include:
an obtaining unit, configured to obtain a first security context, where the first security context is for protecting a first communication service of the terminal device;
a sending unit, configured to send a session request message to a session management function network element, where the session request message is for requesting to establish a session of a second communication service, and the second communication service is different from the first communication service; and
a receiving unit, configured to receive a session accept message from the session management function network element, where the session accept message is for completing establishment of the session of the second communication service, where
the obtaining unit is further configured to obtain an additional generation indication; and
the obtaining unit is further configured to obtain a second security context based on the additional generation indication, where the second security context is for protecting the second communication service.

In a possible implementation, the session request message includes first indication information, and the first indication information indicates that the terminal device supports generation of the second security context.

In a possible implementation, that the obtaining unit obtains a second security context based on the additional generation indication, where the second security context is for protecting the second communication service includes:
obtaining a security key based on the additional generation indication and a first key; and/or
obtaining a security algorithm based on the additional generation indication.

In a possible implementation, that the obtaining unit obtains a security key based on the additional generation indication and a first key includes:
obtaining the first key based on the additional generation indication and an AS root key of the first security context; and
generating the security key based on the first key.

In a possible implementation, the additional generation indication includes an indication of a first derivative parameter, and that the obtaining unit obtains the first key based on the additional generation indication and an AS root key of the first security context includes:
generating the first key based on the AS root key of the first security context and the first derivative parameter.

In a possible implementation, the first derivative parameter is a downlink PDCP count, and the indication of the first derivative parameter is some bits of the downlink PDCP count.

In a possible implementation, the apparatus may further include:
an execution unit, configured to perform secondary authentication; and
a generation unit, configured to generate a secondary authentication key in a process of performing the secondary authentication; and
that the obtaining unit obtains a security key based on the additional generation indication and a first key includes:
   obtaining the first key based on the additional generation indication and the secondary authentication key; and
   generating the security key based on the first key.

In a possible implementation, the additional generation indication includes an indication of a second derivative parameter, and that the obtaining unit obtains the first key based on the additional generation indication and the secondary authentication key includes:
generating the first key based on the indication of the second derivative parameter, the secondary authentication key, and the second derivative parameter.

In a possible implementation, the second derivative parameter is one or more of the following parameters: a downlink NAS count, a PDU session ID, NSSAI, and a DNN.

In a possible implementation, that the obtaining unit generates the security key based on the first key includes:
generating the security key based on the first key and a third derivative parameter.

In a possible implementation, the additional generation indication includes an identifier of the security algorithm, and that the obtaining unit generates the security key based on the first key and a third derivative parameter includes:
generating the security key based on the first key and the identifier and a type of the security algorithm.

In a possible implementation, the additional generation indication includes an identifier of the security algorithm.

In a possible implementation, when the first communication service is a public network service, the second communication service is a private network service; and when the first communication service is a private network service, the second communication service is a public network service.

According to a fifth aspect, a security context generation apparatus is disclosed. The security context generation apparatus may be a session management function network element, or may be a module (for example, a chip) in the session management function network element. The apparatus may include:
a receiving unit, configured to receive a session request message to a terminal device, where the session request message is for requesting to establish a session of a second communication service; and
a sending unit, configured to send an additional security context indication to a data transmission network element, where the additional security context indication indicates that to generate a second security context, and the second security context is for protecting the second communication service, where
the sending unit is further configured to send a session accept message to the terminal device, where the session accept message is for completing establishment of the session of the second communication service.

In a possible implementation, the session request message includes first indication information and the first indication information indicates that the terminal device supports generation of the second security context. That the sending unit sends an additional security context indication to a data transmission network element includes:
when the first indication information indicates that the terminal device supports generation of the second security context, sending the additional security context indication to the data transmission network element.

In a possible implementation, that the sending unit sends the additional security context indication to the data transmission network element includes:
obtaining subscription information of the terminal device based on the session request message; and
when the subscription information of the terminal device indicates that the second security context needs to be generated, sending the additional security context indication to the data transmission network element.

In a possible implementation, that the sending unit sends the additional security context indication to the data transmission network element includes:
when a local policy configured by the session management function network element indicates that the second security context needs to be generated, sending the additional security context indication to the data transmission network element.

In a possible implementation, the additional security context indication includes an identifier of a security algorithm, and the apparatus may further include an obtaining unit, where
the obtaining unit is configured to obtain the security algorithm.

In a possible implementation, the additional security context indication includes a first key, and the apparatus may further include:
a triggering unit, configured to trigger secondary authentication, where
the receiving unit is further configured to: after the secondary authentication succeeds, receive a secondary authentication key from an authentication, authorization, and accounting network element; and
an obtaining unit, configured to obtain the first key based on the secondary authentication key.

In a possible implementation, that the obtaining unit is configured to obtain the first key based on the secondary authentication key includes:
obtaining the first key based on the secondary authentication key and a second derivative parameter.

In a possible implementation, the second derivative parameter is one or more of the following parameters: a downlink NAS count, a PDU session ID, NSSAI, and a DNN.

In a possible implementation, the session accept message includes an indication of the second derivative parameter, and the indication of the second derivative parameter indicates that a security key is obtained based on the secondary authentication key.

According to a sixth aspect, a security context generation apparatus is disclosed. The security context generation apparatus may be a data transmission network element, or may be a module (for example, a chip) in the data transmission network element. The apparatus may include:
a receiving unit, configured to receive an additional security context indication from a session management function network element;
an obtaining unit, configured to obtain a second security context based on the additional security context indication, where the second security context is for protecting a second communication service; and
a sending unit, configured to send an additional generation indication to a terminal device, where the additional generation indication indicates to generate the second security context.

In a possible implementation, the obtaining unit is specifically configured to:
obtain a security key based on the additional security context indication and a first key; and/or
obtain a security algorithm based on the additional security context indication.

In a possible implementation, the obtaining unit is further configured to obtain a first security context before the additional security context indication is received from the session management function network element, where the first security context is for protecting a first communication service, and the first communication service is different from the second communication service.

In a possible implementation, that the obtaining unit generates a security key based on the additional security context indication and a first key includes:
obtaining the first key based on the additional security context indication and an AS root key of the first security context; and
generating the security key based on the first key.

In a possible implementation, the additional generation indication includes an indication of a first derivative parameter and that the obtaining unit obtains the first key based on the additional security context indication and an AS root key of the first security context includes:
generating the first key based on the AS root key of the first security context and the first derivative parameter.

In a possible implementation, the first derivative parameter is a downlink PDCP count, and the indication of the first derivative parameter is some bits of the downlink PDCP count.

In a possible implementation, the additional security context indication includes the first key, and that the obtaining unit obtains a security key based on the additional security context indication and a first key includes:
generating the security key based on the first key.

In a possible implementation, that the obtaining unit generates the security key based on the first key includes:
generating the security key based on the first key and a third derivative parameter.

In a possible implementation, the additional security context indication includes an identifier of the security algorithm and that the obtaining unit generates the security key based on the first key and a third derivative parameter includes:
generating the security key based on the first key and the identifier and a type of the security algorithm.

In a possible implementation, the additional generation indication includes an identifier of the security algorithm.

In a possible implementation, the additional security context indication includes an identifier of the security algorithm.

In a possible implementation, that the obtaining unit obtains a security algorithm based on the additional security context indication includes:
obtaining the security algorithm based on the additional security context indication, a security capability of the terminal device, and a preconfigured algorithm priority list, where the security capability of the terminal device indicates all security algorithms supported by the terminal device.

In a possible implementation, when the first communication service is a public network service, the second communication service is a private network service; and when the first communication service is a private network service, the second communication service is a public network service.

According to a seventh aspect, a security context generation apparatus is disclosed. The security context generation apparatus may be a terminal device or a module (for example, a chip) in the terminal device. The security context generation apparatus may include a processor, a memory, an input interface, and an output interface. The input interface is configured to receive information from an apparatus other than the apparatus. The output interface is configured to output information to an apparatus other than the apparatus. When the processor executes a computer program stored in the memory, the processor is enabled to perform the security context generation method disclosed in any one of the first aspect or the implementations of the first aspect.

According to an eighth aspect, a security context generation apparatus is disclosed. The security context generation apparatus may be a session management function network element or a module (for example, a chip) in the session management function network element. The security context generation apparatus may include a processor, a memory, an input interface, and an output interface. The input interface is configured to receive information from an apparatus other than the apparatus. The output interface is configured to output information to an apparatus other than the apparatus. When the processor executes a computer program stored in the memory, the processor is enabled to perform the security context generation method disclosed in any one of the second aspect or the implementations of the second aspect.

According to a ninth aspect, a security context generation apparatus is disclosed. The security context generation apparatus may be a data transmission network element or a module (for example, a chip) in the data transmission network element. The security context generation apparatus may include a processor, a memory, an input interface, and an output interface. The input interface is configured to receive information from an apparatus other than the apparatus. The output interface is configured to output information to an apparatus other than the apparatus. When the processor executes a computer program stored in the memory, the processor is enabled to perform the security context generation method disclosed in any one of the third aspect or the implementations of the third aspect.

According to a tenth aspect, a communication system is disclosed. The communication system includes the security context generation apparatus in the seventh aspect, the security context generation apparatus in the eighth aspect, and the security context generation apparatus in the ninth aspect.

According to an eleventh aspect, a computer-readable storage medium is disclosed. The computer-readable storage medium stores a computer program or computer instructions. When the computer program or the computer instructions are run, the security context generation method disclosed in any one of the foregoing aspects is implemented.

According to a twelfth aspect, a chip is disclosed. The chip includes a processor, configured to execute a program stored in a memory. When the program is executed, the chip is enabled to perform the foregoing method.

In a possible implementation, the memory is located outside the chip.

According to a thirteenth aspect, a computer program product is disclosed. The computer program product includes computer program code. When the computer program code is run, the foregoing method is performed.

### BRIEF DESCRIPTION OF DRAWINGS

FIG. 1 is a schematic diagram of a network architecture according to an embodiment of this application;
FIG. 2 is a schematic diagram of a security context generation procedure according to an embodiment of this application;
FIG. 3 is a schematic diagram of another security context generation procedure according to an embodiment of this application;
FIG. 4 is a schematic diagram of still another security context generation procedure according to an embodiment of this application;
FIG. 5 is a schematic diagram of still another security context generation procedure according to an embodiment of this application;
FIG. 6 is a schematic diagram of still another security context generation procedure according to an embodiment of this application;
FIG. 7 is a schematic diagram of a structure of a communication apparatus according to an embodiment of this application;
FIG. 8 is a schematic diagram of a structure of another communication apparatus according to an embodiment of the present invention;
FIG. 9 is a schematic diagram of a structure of still another communication apparatus according to an embodiment of the present invention;
FIG. 10 is a schematic diagram of a structure of still another communication apparatus according to an embodiment of the present invention; and
FIG. 11 is a schematic diagram of a structure of still another communication apparatus according to an embodiment of the present invention.

### DESCRIPTION OF EMBODIMENTS

Embodiments of this application disclose a security context generation method and apparatus, and a computer-readable storage medium, to improve security of a communication service. Details are separately described below.

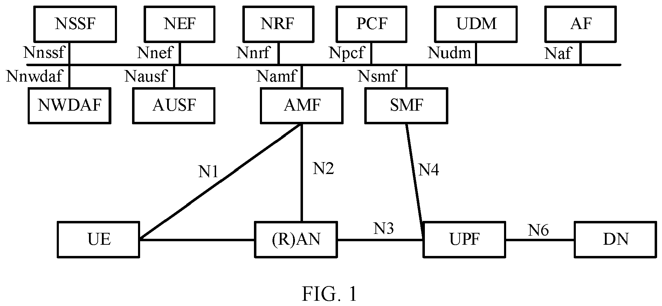

To better understand the security context generation method and apparatus, and the computer-readable storage medium disclosed in embodiments of the present invention, the following first describes a network architecture to which embodiments of the present invention are applied. FIG. 1 is a schematic diagram of a network architecture according to an embodiment of the present invention. As shown in FIG. 1, the network architecture may include user equipment (user equipment, UE), a (radio) access network (radio access network, (R)AN) device, a user plane function (user plane function, UPF) network element, a data network (data network, DN), a session management function (session management function, SMF) network element, an access and mobility management function (access and mobility management function, AMF) network element, a unified data management (unified data management, UDM) network element, an authentication server function (authentication server function, AUSF) network element, a network slice selection function (network slice selection function, NSSF) network element, a policy control function (policy control function, PCF) network element, an application function (application function, AF) network element, a network slice selection assistance information (network slice selection assistance information, NSSAI) network element, a network data analytics function (network data analytics function, NWDAF) network element, a network exposure function (network exposure function, NEF) network element, and a network repository function (network repository function, NRF) network element.

The UE may alternatively be referred to as a terminal device, a mobile station (mobile station, MS), a mobile terminal (mobile terminal, MT), or the like, and is a device that provides a user with voice or data connectivity. The terminal device may be a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem, a handheld (handheld) device, a laptop computer, a cordless phone (cordless phone), or a wireless local loop (wireless local loop, WLL) station, a machine type communication (machine type communication, MTC) terminal, a wearable device (for example, a smartwatch, a smartband, or a pedometer), a vehicle-mounted device (for example, the vehicle-mounted device on an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or other devices that can access a network. The terminal device in FIG. 1 is shown as the UE. This is merely used as an example and is not limited to the terminal device. The UE may access a DN by establishing a session among the UE, the (R)AN device, the UPF, and the DN, that is, a protocol data unit (protocol data unit, PDU) session.

The (R)AN device is a device that provides radio access for the UE, and is mainly responsible for functions such as radio resource management, quality of service (quality of service, QoS) flow management, and data compression and encryption on an air interface side. The (R)AN may directly communicate with the UE by using an AS. The (R)AN device may include base stations in various forms, for example, a macro base station, a micro base station (also referred to as a small cell), a relay station, and an access point. The (R)AN device may further include a wireless fidelity (wireless fidelity, Wi-Fi) access point (access point, AP). The (R)AN device may further include a worldwide interoperability for microwave access (worldwide interoperability for microwave access, WiMax) base station (base station, BS). The (R)AN may be a network side device in a 5G network or a network later than 5G, or a network device in a PLMN network, for example, may be a next generation NodeB (generation NodeB, gNB), a next generation evolved NodeB (next generation-evolved NodeB, ng-eNB), or an evolved base station (evolved NodeB, eNB).

The AMF network element may receive non-access stratum (non-access stratum, NAS) signaling (including mobility management (mobility management, MM) signaling and session management (session management, SM) signaling) of the UE through an N1 interface and access RAN signaling through an N2 interface, to complete SM signaling forwarding and mobility management of the UE.

The SMF network element is mainly responsible for session management in a mobile network, such as session establishment, modification, release, and update. For example, specific functions are allocation of an IP address for a user and selection of a UPF network element that provides a packet forwarding function. A message between the SMF and the UE may be encapsulated in a session management (session management, SM) container (container) of a NAS message. The AMF may extract content of the SM container from the NAS message, and then send the content to the SMF.

The PCF network element may be responsible for terminal device policy management, including both a mobility related policy and a PDU session related policy, such as a QoS policy and a charging policy. The PCF can manage a session policy of a user.

The AF network element mainly supports interaction with a 3rd generation partnership project (3rd generation partnership project, 3GPP) core network to provide a service, to affect service flow routing, access network capability exposure, policy control, and the like.

The UDM network element is responsible for user key management, user identifier processing, subscription data access authorization, network function entity management of the UE, session and service continuity management, short message push, lawful interception, subscription management, short message management, and user data management and control, such as subscription information management.

The UPF network element is mainly responsible for processing a user packet, such as forwarding and charging for the user packet. The user packet may be received from the DN, and transmitted to the UE through the RAN device. Alternatively, the user packet may be received from the UE through the RAN device, and forwarded to the DN. Transmission resources and scheduling functions in the UPF network element that provide services for the UE are managed and controlled by the SMF network element.

The DN may be the Internet (Internet), an IP multimedia service (IP multimedia service, IMS) network, a regional network, that is, a local network, for example, a multi-access edge computing (multi-access edge computing, MEC) network, or the like. The DN is a destination that a PDU session of the UE accesses. The DN includes or is deployed with an application server, and the application server may perform data transmission with the UE, to provide a service for the UE.

The AUSF network element may be responsible for performing authentication and authorization on access of the UE.

A data transmission network element is mainly responsible for processing a user packet, and may be the RAN device, or may be the UPF network element.

Each of the network elements in the core network may also be referred to as a functional entity, and may be a network element implemented on dedicated hardware, a software instance running on dedicated hardware, or an instance of a virtualization function on an appropriate platform. For example, the virtualization platform may be a cloud platform.

It should be noted that the system architecture shown in FIG. 1 is not limited to only the network elements shown in the figure, and may further include other devices or network elements that are not shown in the figure. Details are not listed one by one in this application.

It should be noted that a distribution form of the network elements in the core network is not limited in this embodiment of this application. The distribution form shown in FIG. 1 is merely an example, and is not a limitation on this application.

It should be understood that names of all network elements in this application are merely used as examples. In future communication, for example, 6G, names of the network elements may also be referred to as other names. Alternatively, in future communication, for example, 6G, the network elements in this application may be replaced with other entities, devices, or the like that have a same function. This is not limited in this application. Unified descriptions are provided herein, and details are not described below again.

It should be noted that the 5G network architecture shown in FIG. 1 does not constitute a limitation on a 5G network. Optionally, the method in this embodiment of this application is further applied to various future communication systems, for example, a 6G system or another communication network.

In addition, the foregoing network structure may further include an authentication, authorization, and accounting (authentication authorization and accounting, AAA) network element, and the AAA network element may complete authentication on an access terminal device.

For better understanding embodiments of this application, the following first describes an application scenario of embodiments of this application.

In a PNI-NPN scenario, there may be three roles: a terminal device (for example, a company computer used by an employee of Volkswagen), a PLMN (for example, China Mobile), and an NPN (for example, a Volkswagen automobile enterprise). The terminal device may perform both a public network service and a private network service by using the PLMN. For example, the terminal device may use an instant messaging application and an email at the same time. When security of the 5G network is considered, the terminal device may perform security protection with an access network. To be specific, communication between the UE and the (R)AN device may for protected by using one security context, so that security of a user plane data flow between a user and a network can be ensured.

For ease of understanding this application, related technical knowledge included in embodiments of this application is described herein first.

The security context is a context that may be for performing security protection on communication content, and the security protection may include confidentiality protection and/or integrity protection. The context includes at least a security key and a security algorithm. Optionally, the context may further include a security policy, a security activation indication, a freshness parameter, and the like. When the communication content is a communication service, a security key for confidentiality protection may be Kup-enc, a security algorithm for confidentiality protection may be an encryption algorithm for 5G (encryption algorithm for 5G, NEA) or an EPS encryption algorithm (evolved packet system encryption algorithm, EEA), a security key for integrity protection may be Kup-int, and a security algorithm for integrity protection may be an integrity algorithm for 5G (integrity algorithm for 5G, NIA) or an EPS integrity algorithm (evolved packet system integrity algorithm, EIA). Communication parties may configure the security key and the security algorithm on PDCP layers. A sending party may use the security key and the security algorithm to perform encryption and/or integrity protection on sent communication content. A receiving party may use the same security key and the same security algorithm to perform decryption and/or integrity check on received communication content.

The communication service is user plane traffic communicated by a terminal device by using a mobile network and a service provided by a server. The communication service may include a public network service and a private network service. The public network service represents that the service provided by the server can be publicly accessed, for example, an application provided by a service provider. The private network service represents that the service provided by the server is accessed with a limitation, for example, a private operation application of an enterprise. The terminal device may need to establish different sessions with the mobile network for different services.

Encryption protection may be performed on the user plane traffic between the UE and the (R)AN device by using an encryption key kup-enc and an encryption algorithm, and integrity protection may be performed on the user plane traffic by using an integrity protection key kup-int and an integrity protection algorithm. The security key may include the encryption key and the integrity protection key, and the security algorithm may include the encryption algorithm and the integrity protection algorithm. The security context may include the security key and/or the security algorithm. The user plane traffic can be sent on different data radio bearers (data radio bearers, DRBs). Encryption protection or integrity protection may be enabled or disabled for different DRBs. When protection is enabled for a DRB, keys and algorithms for all DRBs for which protection is enabled are the same. In other words, communication protection between all terminal devices and the access network device may be performed by using a same security context. In this case, when an attacker obtains a security key that is for the public network service, the attacker obtains a security key of the private network service, and therefore can obtain service traffic of a private network, and vice versa. For example, the attacker may obtain, by cracking a security algorithm that is for the public network service, a security key that is for the public network service, to obtain a security context of the public network service. When the attacker obtains a security context of a public network, the attacker may obtain a security context of the private network, and therefore can obtain service traffic of the private network by using the security context of the private network. The foregoing protection mode does not implement security isolation between public network service protection and private network service protection. Therefore, how to implement security isolation between a public network service and a private network service in the PNI-NPN is a technical problem to be urgently resolved.

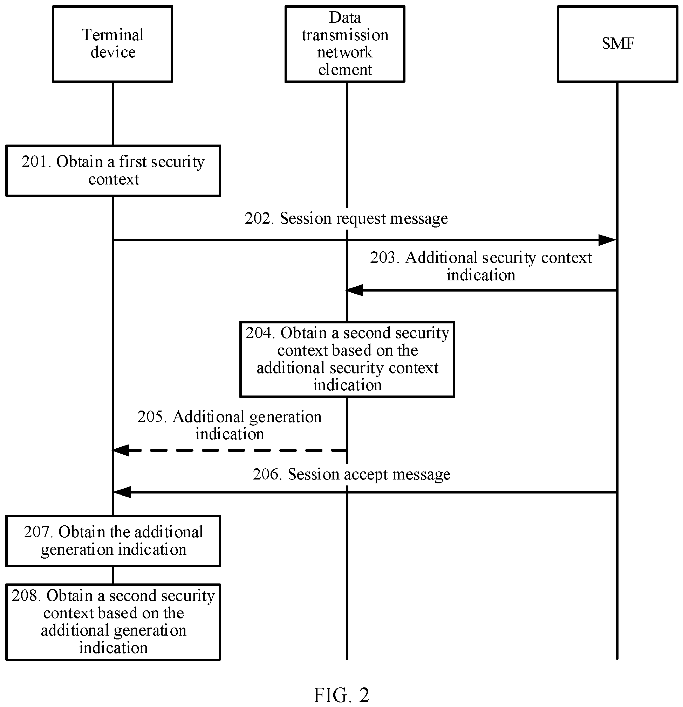

Based on the foregoing network architecture, refer to FIG. 2. FIG. 2 is a schematic flowchart of a security context generation method according to an embodiment of the present invention. As shown in FIG. 2, the security context generation method may include the following steps.

201. A terminal device obtains a first security context.

When the terminal device needs to protect data, the terminal device may generate the first security context, to perform security protection on the data by using the first security context. The first security context may include a first security key and/or a first security algorithm. The first security key may include a first encryption key and/or a first integrity protection key. The first security algorithm may include a first encryption algorithm and/or a first integrity protection algorithm. The first security context may be for protecting a first communication service of the terminal device. The first communication service may be a public network service or a private network service. It should be understood that the data may be user plane data.

After the terminal device registers with a PLMN and requests to establish a session of the first communication service, the terminal device and an access network device may obtain the first security context for protecting the first communication service, and may protect the first communication service by using the first security context. For a procedure of obtaining the first security context by the terminal device, refer to related descriptions in 3GPP TS 33.501.

202. The terminal device sends a session request message to a session management function network element.

The terminal device may send the session request message to the session management function network element, and correspondingly, the session management function network element may receive the session request message from the terminal device. Specifically, the terminal device may first send a NAS message to an access and mobility management function network element, where the NAS message may include an SM message. After receiving the NAS message from the terminal device, the access and mobility management function network element may first extract the SM message from the NAS message, and then may send the SM message to the session management function network element. The session request message may be the SM message. The SM message may be a PDU session establishment request message or a PDU session modification request message. The session request message may be for requesting to establish a session of a second communication service. The NAS message may include a DNN and/or NSSAI. The access and mobility management function network element may extract the DNN and/or the NSSAI from the NAS message, and send the DNN and/or the NSSAI to the session management function network element. In addition, when a data transmission network element is a user plane function network element, the session request message may include an identifier of the terminal device, where the identifier of the terminal device may be for determining the user plane function network element. It should be understood that the session request message is for requesting to establish the session of the second communication service, and a name of the message is not limited.

The session request message may include first indication information, and the first indication information may indicate that the terminal device supports generation of a second security context. In other words, it may be understood as that the first indication information may indicate that the terminal device supports generation of the second security context, the first indication information may be for requesting to generate the second security context, or the first indication information may indicate that security isolation needs to be implemented for the session. The second security context may include a second security algorithm and/or a second security key. The second security algorithm may include a second encryption algorithm and/or a second integrity protection algorithm. The second security key may include a second encryption key and/or a second integrity protection key.

The first communication service and the second communication service are different communication services. The second communication service may be a public network service or a private network service. When the first communication service is a public network service, the second communication service may be a private network service; and when the first communication service is a private network service, the second communication service may be a public network service.

The first security context and the second security context are different security contexts. It may be understood as that, the second security key is different from the first security key, but the second security algorithm is the same as the first security algorithm. Alternatively, it may be understood as that, the second security algorithm is different from the first security algorithm, but the second security key is the same as the first security key. Alternatively, it may be understood as that, the second security key is different from the first security key, and the second security algorithm is different from the first security algorithm. The second security context may be for protecting the second communication service, and the first security context and the second security context may be respectively for protecting different communication services.

203. The session management function network element sends an additional security context indication to the data transmission network element.

After receiving the session request message from the terminal device, the session management function network element may first determine whether the second security context needs to be generated for the terminal device. When determining that the terminal device needs to generate the second security context, the session management function network element may send the additional security context indication to the data transmission network element. Correspondingly, the data transmission network element may receive the additional security context indication from the session management function network element. When determining that the terminal device does not need to generate the second security context, step 203 to step 207 may not be performed.

In a possible implementation, after receiving the session request message from the terminal device, the session management function network element may determine, based on the first indication information, whether the terminal device supports generation of the second security context. In an implementation, when the first indication information is an explicit indication, the session management function network element may determine whether the session request message includes the first indication information. When it is determined that the session request message includes the first indication information, it indicates that the terminal device supports generation of the second security context. When it is determined that the session request message does not include the first indication information, it indicates that the terminal device does not support generation of the second security context. In another implementation, the first indication information is an implicit indication. For example, the session request message may include 1 bit. When the bit is of a specific value, for example, 0 or 1, it indicates that the terminal device supports generation of the second security context. When the bit is not of the specific value or does not include the specific value, the session request message indicates that the terminal device does not support generation of the second security context.

In another possible implementation, after receiving the session request message from the terminal device, the session management function network element may obtain subscription information of the terminal device, and then may determine, based on the subscription information, whether the terminal device needs to generate the second security context. When the subscription information includes second indication information, it indicates that the terminal device needs to generate the second security context. Otherwise, it indicates that the terminal device does not need to generate the second security context. The second indication information may indicate that the terminal device supports to generate the second security context, that is, indicate that the terminal device supports generation of the second security context, the second indication information is for requesting to generate the second security context, or the second indication information indicates that security isolation needs to be implemented for the session. The session management function network element may obtain the subscription information of the terminal device from a UDM network element or a PCF network element.

In still another possible implementation, the session management function network element may preconfigure a local policy or configure a local policy by default. Therefore, after receiving the session request message from the terminal device, the session management function network element may determine, based on related information of the session and according to the local policy, whether the terminal device needs to generate the second security context. For example, the local policy is that a specific session needs to be protected by using a different security context. In this case, after receiving the DNN and/or the NSSAI from the terminal device, the session management function network element may determine, according to the local policy, whether a service corresponding to the DNN and/or the NSSAI needs to be protected by using a different security context. When determining that the service needs to be protected by using a different security context, the session management function network element determines that the second security context needs to be generated for the UE.

It should be understood that the session management function network element may determine, in one or more of the foregoing manners, whether the second security context needs to be generated. To be specific, whether the terminal device supports generation of the second security context may be determined based on the first indication information. When it is determined, based on the first indication information, that the terminal device supports generation of the second security context, it is determined that the second security context needs to be generated. Alternatively, whether the second security context needs to be generated may be determined based on the subscription information. Alternatively, whether the second security context needs to be generated may be determined according to the local policy. Alternatively, whether the second security context needs to be generated may be determined based on the first indication information and the subscription information. When it is determined, based on the first indication information, that the terminal device supports generation of the second security context, and when it is determined, based on the subscription information, that the second security context needs to be generated, it is determined that the second security context needs to be generated. Alternatively, whether the second security context needs to be generated may be determined based on the first indication information and according to the local policy. When it is determined, based on the first indication information, that the terminal device supports generation of the second security context, and when it is determined, according to the local policy, that the second security context needs to be generated, it is determined that the second security context needs to be generated.

The additional security context indication may indicate to generate the second security context. The additional security context indication may be an explicit indication. For example, the additional security context indication may include 1 bit. When a value of the bit is 1, it may indicate to generate the second security context. When a value of the bit is 0, it may indicate not to generate the second security context. Alternatively, the additional security context indication may be an implicit indication. For example, the additional security context indication may be an information element required for generating the second security context. For example, the additional security context indication is sent to the data transmission network element based on a key, an algorithm, a flag bit, an indicator, an index, a transmission resource, or the like. For example, when the data transmission network element receives the key, it indicates that the session management function network element indicates the data transmission network element to generate the second security context.

Optionally, after determining that the second security context needs to be generated for the terminal device, the session management function network element may determine a security algorithm.

In a possible implementation, the session management function network element may preconfigure a mapping relationship between a DNN and a security algorithm. When determining that the terminal device needs to generate the second security context, the session management function network element may directly find, based on the DNN reported by the terminal device and the mapping relationship, a security algorithm used by the session management function network element.

In another possible implementation, the session management function network element may preconfigure a mapping relationship between a DNN and an algorithm priority list. When determining that the terminal device needs to generate the second security context, the session management function network element may find an algorithm priority list based on the DNN reported by the terminal device and the mapping relationship, and then obtain, based on a security capability of the terminal device and the algorithm priority list, a security algorithm used by the session management function network element. The algorithm priority list is an algorithm list reflecting a use priority, and may be represented as priority 1: algorithm B, priority 2: algorithm A, and priority 3: algorithm C. A smaller priority value may indicate a higher priority. The security capability of the terminal device is reported by the terminal device, and may indicate an algorithm that can be supported by the terminal device, for example, an algorithm A, an algorithm B, and an algorithm C. Because the terminal device supports all of the three algorithms A, B, and C, but the algorithm B has a highest priority, the algorithm B is finally obtained as the security algorithm.

After the session management function network element determines the security algorithm, the additional security context indication may include an identifier of the security algorithm.

Optionally, after determining that the second security context needs to be generated for the terminal device, the session management function network element may determine a first key.

Alternatively, the first key may be obtained based on a secondary authentication key. The session management function network element receives the secondary authentication key from an authentication, authorization, and accounting network element.

The session management function network element may generate the first key based on the secondary authentication key and a second derivative parameter. The session management function network element may trigger secondary authentication of the terminal device. For example, when the session management function network element determines that the second security context needs to be generated, the session management function network element may trigger, based on the DNN and the subscription information of the terminal device, secondary authentication between the terminal device and the authentication, authorization, and accounting network element. After the secondary authentication of the terminal device succeeds, the authentication, authorization, and accounting network element may send a secondary authentication key to the session management function network element. The session management function network element may receive the secondary authentication key from the authentication, authorization, and accounting network element. The second derivative parameter may be a freshness parameter, and the second derivative parameter may include one or more of an uplink or downlink NAS count, NSSAI, a DNN, and a PDU session ID. The NAS count may be stored in a non-access stratum context of the terminal device, and the NAS count is updated once each time a key is derived, so that first keys generated twice consecutively are prevented from being the same. For example, assuming that a value of the NAS count is a, after derivation is performed based on the NAS count once, the NAS count may be updated to a+b. Therefore, the second time of derivation may be performed based on an updated value of the NAS count. A value of b may be 1, 2, or another numerical value. This is not limited herein. The value of b may be the same during each update. To be specific, the value of the NAS count is increased or decreased by using b as a step. Alternatively, the value of b may be different. The session management function network element may obtain the NSSAI, the DNN, and the PDU session ID from the terminal device by using the session request message. Because slices (NSSAI identifiers), data networks (DNN identifiers), and PDU sessions (PDU session IDs) accessed by different terminal devices or session management function network elements are different, generated first keys may be different.

After the session management function network element determines the first key, the additional security context indication may include the first key.

It should be understood that, when manners of generating the second security context are different, information required for generating the second security context is different. Therefore, the additional security context indication may include different information based on different manners of generating the second security context. For example, the additional security context indication may be an explicit indication, may be the identifier of the security algorithm, or may be the first key. Alternatively, the additional security context indication may include an explicit indication and the identifier of the security algorithm, or may include the first key and the identifier of the security algorithm.

The session management function network element may send the additional security context indication to the data transmission network element by using different messages, signaling, and the like. For example, when the data transmission network element is an access network device, the session management function network element may encapsulate the additional security context indication in an N2 SM information (Information) container and send the N2 SM information container to the data transmission network element. When the data transmission network element is a user plane function network element, the session management function network element may encapsulate the additional security context indication in an N4 session (Session) establishment (Establishment) request (Request) message and send the N4 session establishment request message to the data transmission network element.

204. The data transmission network element obtains a second security context based on the additional security context indication.

After receiving the additional security context indication from the session management function network element, the data transmission network element may obtain the second security context based on the additional security context indication.

The data transmission network element may obtain the security algorithm based on the additional security context indication.

In a possible implementation, the data transmission network element may preconfigure an algorithm priority list. The algorithm priority list may include a security capability of the terminal device and priority information of a security algorithm. The data transmission network element may determine the security algorithm based on the algorithm priority list. The data transmission network element may obtain the security capability of the terminal device from a stored context of the terminal device. When the data transmission network element has the first security context, because the data transmission network element needs to generate a first security algorithm and a second security algorithm of a same terminal device, to ensure that the first security algorithm and the second security algorithm are different, algorithm priority lists corresponding to the first security algorithm and the second security algorithm need to be different. For a same terminal device, if the data transmission network element uses a same algorithm priority list, it is likely that a finally determined first security algorithm is the same as a finally determined second security algorithm, and consequently, an objective of security isolation cannot be achieved. It should be understood that, the security algorithm obtained based on the additional security context indication is the second security algorithm.

In another possible implementation, when the additional security context indication includes the identifier of the security algorithm, the data transmission network element may determine the security algorithm corresponding to the identifier as the security algorithm.

In still another possible implementation, when the data transmission network element has the first security context, the data transmission network element may obtain the security algorithm from the first security algorithm of the first security context based on the additional security context indication.

The data transmission network element may obtain a security key based on the additional security context indication and the first key. It may be understood as that, the additional security context indication may trigger the data transmission network element to obtain the security key based on the first key. Alternatively, it may be understood as that, the data transmission network element may obtain the security key based on the first key by responding to the additional security context indication.

In a case, the data transmission network element may first determine the first key, and then may obtain the security key based on the first key.

When the data transmission network element has the first security context, the data transmission device may obtain the first key based on the additional security context indication and an AS root key of the first security context, that is, determine (or generate) the first key based on the AS root key of the first security context. The AS root key may be a key K_{gNB}, may be K_{eNB}, or may be a next hop (next hop, NH).

In a manner, the data transmission network element may use the AS root key of the first security context as the first key.

In another manner, the data transmission network element may generate the first key based on the AS root key of the first security context and a first derivative parameter. The first derivative parameter may be a PDCP count, and the first derivative parameter may be stored in an access stratum context of the terminal device. Each time the data transmission network element uses the PDCP count, a value of the PDCP count needs to be updated, that is, the value of the PDCP count is updated once each time a key is derived, so that keys generated twice consecutively are prevented from being the same. For example, assuming that the value of the PDCP count is a, after derivation is performed based on the PDCP count once, the value of the PDCP count may be updated to a+b. Therefore, a next time of derivation may be performed based on an updated value of the PDCP count. A value of b may be 1, 2, or another numerical value. This is not limited herein. The value of b may be the same during each update. To be specific, the value of the PDCP count is increased or decreased by using b as a step. Alternatively, the value of b may be different. It should be understood that the first derivative parameter may be a freshness parameter. The value of the PDCP count is updated, so that a security key generated each time may be different, thereby improving key security and achieving an effect of security isolation.

When the data transmission network element is configured with a correspondence between the identifier of the terminal device and a root key Kn, and the additional security context indication may carry the identifier of the terminal device, the data transmission network element may obtain the first key based on the identifier of the terminal device, that is, determine (or generate) the first key based on Kn. The root key Kn needs to be different for each terminal device, and may be preconfigured on the data transmission network element. The data transmission network element may determine the root key Kn based on the identifier of the terminal device and the correspondence between the terminal device and the root key Kn.

In a manner, the data transmission network element may use the root key Kn as the first key.

In another manner, after determining the root key Kn, the data transmission network element may generate the first key based on the root key Kn and the first derivative parameter. For detailed descriptions of generating the first key, refer to related descriptions of generating the first key by the data transmission network element based on the AS root key and the first derivative parameter. Details are not described herein again.

In another case, the additional security context indication may include the first key. The data transmission network element may first extract the first key from the additional security context indication, and then may generate the security key based on the first key.

After determining the first key, the data transmission network element may further generate the security key based on the first key.

Optionally, the data transmission network element may generate the security key based on the first key and a third derivative parameter.

The third derivative parameter may include the identifier and a type of the security algorithm. In this case, the data transmission network element may determine the identifier and the type of the security algorithm based on the obtained security algorithm.

Optionally, the data transmission network element may obtain the security algorithm based on the additional security context indication, and determine the identifier and the type of the security algorithm based on the obtained security algorithm.

Optionally, when the data transmission network element has the first security context, the data transmission network element may obtain the security algorithm based on the first security algorithm of the first security context, and determine the identifier and the type of the security algorithm based on the obtained security algorithm.

The identifier of the security algorithm may be for identifying the obtained security algorithm. For example, an encryption algorithm may be EEA1, NEA1, or the like, and an integrity algorithm may be EIA1, NIA1, or the like.

The type of the security algorithm may be set to different values based on different scenarios in which the current algorithm is used. For example, when the security algorithm is for user plane confidentiality protection, the type of the security algorithm may be set to a value 0x05 corresponding to N-UP-ENC-ALG. When the security algorithm is for user plane integrity protection, the type of the security algorithm may be set to a value 0x06 corresponding to N-UP-INT-ALG. Therefore, the type of the security algorithm may be 0x05 or 0x06. In addition, the type of the security algorithm may be a value different from existing values 0x01 to 0x06, and indicate that the security algorithm is for user plane confidentiality protection of the second communication service or user plane integrity protection of the second communication service. For example, when the current algorithm is for user plane confidentiality protection of the second communication service, the type of the security algorithm may be 0x07; or when the current algorithm is for user plane integrity protection of the second communication service, the type of the security algorithm may be 0x08. The data transmission network element may generate the security key based on the first key and the identifier and the type of the security algorithm. For a specific manner of generating the first key, refer to the foregoing related descriptions. Details are not described herein again.

Optionally, the data transmission network element may alternatively generate the security key based on the first key and a special character string. The special character string may be a preconfigured specific character string, for example, "NPN" or "Secondary".

The solution of introducing the special character string may be different from the existing solution of using the type, namely, one of 0x01 to 0x06, of the security algorithm as a derivative parameter of a key to generate the second encryption key and the second integrity protection key, so that even if the obtained security algorithm is the same as the first security algorithm and the obtained first key is the same as the AS root key of the first security context, it can still be ensured that the obtained security key is different from the first security key. It may be understood as that the first encryption key is different from the second encryption key. Alternatively, it may be understood as that the first integrity protection key is different from the second integrity protection key. Alternatively, it may be understood as that the first encryption key is different from the second encryption key and the first integrity protection key is different from the second integrity protection key. Therefore, this can prevent the first security context and the second security context from being the same, and ensure effectiveness of security isolation, to ensure security of a communication service.

It should be understood that a method for determining the security algorithm and a method for generating the security key may be associated with each other, or may be independent.

205. The data transmission network element sends an additional generation indication to the terminal device.

The additional generation indication may indicate to generate the second security context. The additional generation indication may be an explicit indication. For example, the additional generation indication may include 1 bit. When a value of the bit is 1, it may indicate to generate the second security context. When a value of the bit is 0, it may indicate not to generate the second security context. Alternatively, the additional generation indication may be an implicit indication. For example, the additional generation indication may be an information element required for generating the second security context. For example, the additional generation indication is sent to the terminal device based on an algorithm, a flag bit, an indicator, an index, a transmission resource, or the like. For example, when the terminal device receives the indicator, it indicates that the data transmission network element indicates the terminal device to generate the second security context.

After the data transmission network element determines the security key, the additional generation indication may further indicate the terminal device to obtain the security key. In this case, the additional generation indication may include an indication of the first derivative parameter. The indication of the first derivative parameter may be the first derivative parameter itself, or may be a value indicating the first derivative parameter. For example, if the second derivative parameter includes a PDCP count, the indication of the first derivative parameter may include some bits of the PDCP count.

After the data transmission network element determines the security algorithm, the additional generation indication may further indicate the terminal device to obtain the security algorithm. In this case, the additional generation indication may include an identifier of the security algorithm.

It should be understood that a manner of determining the second security context is not unique. In different determining methods, the data transmission network element may correspondingly receive different additional security context indications and send different additional generation indications. Therefore, the additional generation indications may include different information based on different manners of generating the second security context. For example, the additional generation indication may be an explicit indication, may be the indication of the first derivative parameter, or may be the identifier of the security algorithm. Alternatively, the additional security context indication may include an explicit indication and the identifier of the security algorithm, may include the indication of the first derivative parameter and the identifier of the security algorithm, or may include the explicit indication, the indication of the first derivative parameter, and the identifier of the security algorithm. It should be understood that, when the data transmission network element generates the second security context based on the first derivative parameter and/or the third derivative parameter, the additional generated indication correspondingly includes the indication of the first derivative parameter and/or the identifier of the security algorithm.

The data transmission network element may directly send the additional generation indication to the terminal device, or may send the additional generation indication by using an RRC message. Optionally, the RRC message may be an RRC reconfiguration message.

The data transmission network element may indirectly send the additional generation indication to the terminal device via the session management function network element. In this case, the additional generation indication may be encapsulated in an N4 session establishment response message and sent to the session management function network element. The session management function network element encapsulates the additional generation indication in a session accept message and sends the session accept message to the terminal device.

It should be understood that, step 205 is an optional step.

206. The session management function network element sends the session accept message to the terminal device.

After receiving the session request message from the terminal device, the session management function network element may establish, based on the session request message, a session for transmitting the second communication service, and may send the session accept message to the terminal device after the session is established. Correspondingly, the terminal device may receive the session accept message of the session management function network element. The session accept message may indicate that establishment of the session of the second communication service is completed. The session accept message may be a PDU session establishment request message or a PDU session modification request message.

Optionally, the session accept message may include the additional generation indication, and the additional generation indication indicates the terminal device to generate the second security context.

After the session management function network element determines the security algorithm, the additional generation indication may further indicate the terminal device to obtain the security algorithm. In this case, the additional generation indication may include the identifier of the security algorithm. It should be understood that the identifier of the security algorithm may be carried in either the session accept message or the additional generation indication sent by the data transmission network element to the terminal device, or may be carried in neither the session accept message nor the additional generation indication. Specific information including the identifier of the security algorithm is not limited herein.

After the session management function network element determines the first key, the additional generation indication may further indicate the terminal device to obtain the first key. In this case, the additional generation indication may include an indication of the second derivative parameter. The indication of the second derivative parameter may be the second derivative parameter itself, or may be a value indicating the second derivative parameter. For example, if the second derivative parameter includes the NAS count, the indication of the second derivative parameter may include some bits of the NAS count. If the second derivative parameter includes the NSSAI, the DNN, and the PDU session ID, the indication of the second derivative parameter may include the NSSAI, the DNN, and the PDU session ID. Alternatively, because the terminal device already knows the NSSAI, the DNN, and the PDU session ID, the indication of the second derivative parameter may include a specific value. When the value is 1, it indicates that the terminal device obtains the NSSAI, the DNN, and the PDU session ID.

When receiving the additional generation indication from the data transmission network element, the session management function network element may forward the additional generation indication to the terminal device. The session management function network element may encapsulate the additional generation indication in the session accept message and send the session accept message to the terminal device.

It should be understood that step 205 and step 206 may be performed in serial or in parallel, and an execution sequence is not limited.

207. The terminal device obtains the additional generation indication.

The terminal device may obtain the additional generation indication. This may be understood as that the terminal device may receive the additional generation indication from the data transmission network element and/or the session management function network element.

The terminal device may receive the additional generation indication from the data transmission network element.

In a case, the terminal device may directly receive the additional generation indication from the data transmission network element. In other words, the terminal device may receive the additional generation indication from the data transmission device.

In another case, the terminal device may indirectly receive the additional generation indication from the data transmission network element. In other words, the data transmission network element may forward the additional generation indication to the terminal device via the session management function network element. For specific descriptions, refer to the descriptions of sending the additional security indication sent by the data transmission network element to the terminal device via the session function management network element in step 205. Details are not described herein again.

The terminal device may receive the additional generation indication from the session management function network element. In other words, the terminal device may receive the additional generation indication from a session management function.

The additional generation indication may include one or more of the following: the indication of the first derivative parameter, the indication of the second derivative parameter, and the identifier of the security algorithm.

It should be understood that, because the additional generation indication may include a plurality of indications, the additional generation indication may be divided into two parts based on a receiving source. One part is obtained from the data transmission network element, and the other part is obtained from the session management function network element. Therefore, the terminal device may obtain a part of the additional generation indication from the data transmission network element, and then obtain the other part of the additional generation indication from the session management function network element. For example, the terminal device may obtain the indication of the first derivative parameter and the identifier of the security algorithm from the data transmission network element, and may further obtain the indication of the second derivative parameter from the session management function network element; the terminal device may obtain the indication of the first derivative parameter from the data transmission network element, and may further obtain the indication of the second derivative parameter and the identifier of the security algorithm from the session management function network element; the terminal device may obtain the identifier of the security algorithm from the data transmission network element, and may further obtain the indication of the second derivative parameter from the session management function network element.

208. The terminal device obtains a second security context based on the additional generation indication.

After obtaining the additional generation indication, the terminal device may generate a second security context based on the additional generation indication. It should be understood that a manner in which the terminal device generates the second security context is the same as a manner in which the data transmission network element generates the second security context. For detailed descriptions, refer to related descriptions of step 204.

The terminal device may obtain the security algorithm based on the additional generation indication.

It should be noted that, when the additional generation indication includes the identifier of the security algorithm, the terminal device may determine the security algorithm based on the identifier. When the additional generation indication does not include the identifier of the security algorithm, the terminal device may obtain the security algorithm based on the first security algorithm in the first security context.

The terminal device may obtain the first key based on the additional generation indication.

When the terminal device has the first security context, the terminal device may obtain the first key based on the additional generation indication and the AS root key of the first security context, that is, determine the first key based on the AS root key of the first security context.

In a manner, the terminal device may use the AS root key of the first security context as the first key.

In another manner, the additional generation indication includes the indication of the first derivative parameter. The terminal device may generate a first key based on the AS root key of the first security context and the first derivative parameter. For detailed descriptions, refer to the descriptions of generating the first key by the data transmission network element based on the AS root key of the first security context and the first derivative parameter in step 204. Details are not described herein again.

The terminal device may correspondingly preconfigure a root key Kn, and the terminal device may generate a first key based on the root key Kn and the additional generation indication.

In a manner, the terminal device may use the root key Kn as the first key.

In another manner, the additional generation indication includes the indication of the first derivative parameter. The terminal device may generate the first key based on the root key Kn and the first derivative parameter. For detailed descriptions, refer to the descriptions of generating the first key by the data transmission network element based on the root key Kn and the first derivative parameter in step 204. Details are not described herein again.

After the session management function network element triggers the secondary authentication, the terminal device may perform the secondary authentication. The terminal device may generate a secondary authentication key in a process of performing the secondary authentication. The terminal device may receive the additional generation indication, where the additional generation indication may include the indication of the second derivative parameter. The terminal device may generate a first key based on the secondary authentication key and the second derivative parameter. For detailed descriptions of a generation method, refer to the descriptions of generating the first key by the session management function network element based on the secondary authentication key and the second derivative parameter in step 203. Details are not described herein again.

After generating the first key, the terminal device may further obtain the security key based on the additional generation indication and the first key, and generate the second security context based on the first key. A specific generation manner may be correspondingly the same as the generation manner used by the data transmission network element in step 204.

The additional generation indication includes the identifier of the security algorithm, and the terminal device may generate a security key based on the first key and the third derivative parameter. For detailed descriptions, refer to the descriptions of generating the security key by the data transmission network element based on the first key and the third derivative parameter in step 204. Details are not described herein again.

It should be understood that the second security context may be generated by the terminal device and the data transmission network element. The data transmission network element may be an access network device, or may be a user plane function network element, or may be another network element having a same function. In other words, it may be understood as that one security context may be generated by two devices. When the data transmission network element has the first security context, both the first security context and the second security context may be generated by the terminal device and the data transmission network element. When the data transmission network element does not have the first security context, the second security context may be obtained by the terminal device and the data transmission network element. In this case, the two security contexts are in different devices. Because the two security contexts have different algorithms and/or keys and are in different network elements, security isolation can be further implemented.

After receiving the session accept message from the session management function network element, the terminal device may determine, based on the session accept message, that establishment of the second communication service is completed, then may perform service transmission corresponding to the second communication service with a data network, and may protect the transmitted second communication service by using the second security context. It can be learned that when a public network service is attacked, impact on a private network service may be avoided, and vice versa. Therefore, security isolation between the public network service and the private network service can be implemented, thereby improving security of the public network service and the private network service.

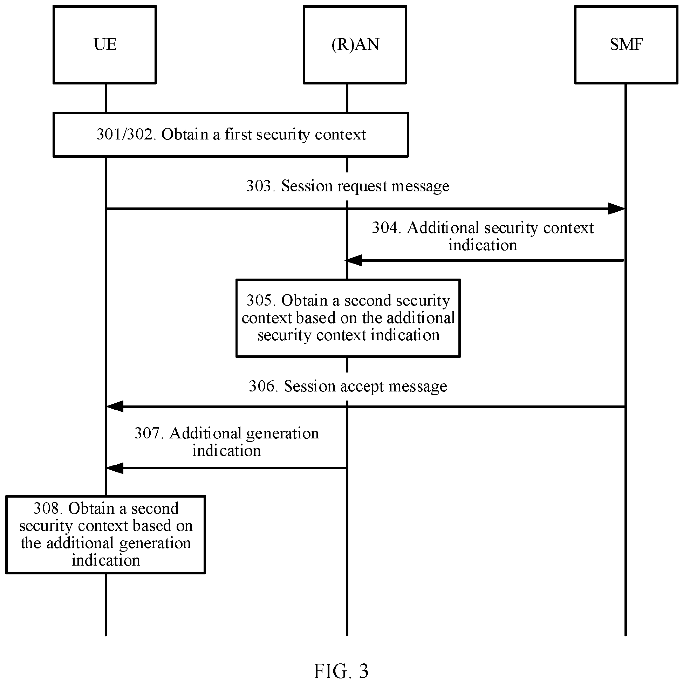

Based on the foregoing network architecture, refer to FIG. 3. FIG. 3 is a schematic flowchart of another security context generation method according to an embodiment of the present invention. As shown in FIG. 3, the security context generation method may include the following steps.

301. A terminal device obtains a first security context.

For detailed descriptions of step 301, refer to the descriptions of step 201. Details are not described herein again.

302. An access network device obtains a first security context

For detailed descriptions of step 302, refer to the descriptions of step 201. Details are not described herein again.

303. The terminal device sends a session request message to a session management function network element.

For detailed descriptions of step 303, refer to the descriptions of step 202. Details are not described herein again.

304. The session management function network element sends an additional security context indication to the access network device.

For detailed descriptions of step 304, refer to the descriptions of step 203. Details are not described herein again.

It should be understood that, when the session management function network element has determined a security algorithm, the additional security context indication may further include an identifier of the security algorithm.

305. The access network device obtains a second security context based on the additional security context indication.

After receiving the additional security context indication from the session management function network element, the access network device may generate the second security context based on the additional security context indication. For detailed descriptions of generating the second security context, refer to the descriptions of step 204.

The access network device may obtain the security algorithm based on the additional security context indication.

In a possible implementation, when the additional security context indication supports generation of the second security context, the access network device may obtain the security algorithm based on an algorithm priority list. For detailed descriptions, refer to the related descriptions of step 204. Details are not described herein again.

In another possible implementation, the additional security context indication may include the identifier of the security algorithm, and the access network device may determine the security algorithm based on the identifier. The security algorithm may have been determined in the session management function network element. For detailed descriptions, refer to the corresponding descriptions of determining the security algorithm by the session management function network element in step 203 and determining the security algorithm based on the additional security context indication in step 204. Details are not described herein again.

In still another possible implementation, the access network device may obtain the security algorithm from a first security algorithm of the first security context based on the additional security context indication.

The access network device may generate a first key based on the additional security context indication.

In a possible implementation, the access network device may obtain an AS root key of the first security context, and use the AS root key as the first key. For detailed descriptions, refer to the related descriptions of step 204. Details are not described herein again.

In another possible implementation, the access network device may generate the first key based on an AS root key of the first security context and a first derivative parameter. For detailed descriptions, refer to the related descriptions of step 204. Details are not described herein again.

Further, the access network device may generate a security key based on the additional security context indication and the first key.

The access network device may generate the security key based on the first key and a third derivative parameter. For detailed descriptions of generating the security key, refer to the descriptions of generating the security key based on the first key and the third derivative parameter in step 204. Details are not described herein again.

306. The session management function network element sends a session accept message to the terminal device.

For detailed descriptions of step 306, refer to the descriptions of step 206. Details are not described herein again.

It should be understood that, when the session management function network element has determined the security algorithm, the session accept message may include an additional generation indication, and the additional generation indication may include the identifier of the security algorithm.

307. The access network device sends the additional generation indication to the terminal device.

The access network device may send the additional generation indication to the terminal device. Correspondingly, the terminal device may receive the additional generation indication from the access network device. For related detailed descriptions, refer to the descriptions of step 205 to step 207. Details are not described herein again.

It should be noted that the additional generation indication may include one or more of the following: an explicit indication, an indication of the first derivative parameter, and the identifier of the security algorithm.

It should be understood that, one of the messages in step 306 and step 307 includes the identifier of the security algorithm.

308. The terminal device obtains the second security context based on the additional generation indication.

For detailed descriptions of step 308, refer to the descriptions of step 305 and step 208.

The terminal device may obtain the security algorithm based on the additional generation indication.

The additional generation indication may include the identifier of the security algorithm. The terminal device may determine the security algorithm based on the identifier. Alternatively, the terminal device may obtain the security algorithm based on the first security algorithm in the first security context. For detailed descriptions, refer to the related descriptions of step 208. Details are not described herein again.

The terminal device may generate a first key based on the additional generation indication.

In a possible implementation, the terminal device may obtain the AS root key of the first security context, and use the AS root key as the first key. For detailed descriptions, refer to the related descriptions of step 208 and step 305. Details are not described herein again.

In another possible implementation, when the additional generation indication includes the indication of the first derivative parameter, the terminal device may generate the first key based on the AS root key of the first security context and the first derivative parameter. For detailed descriptions, refer to the descriptions of generating the first key based on the AS root key and the first derivative parameter in step 204, step 208, and step 305. Details are not described herein again.

Further, the terminal device may generate a security key based on the additional generation indication and the first key.

When the additional generation indication includes the identifier of the security algorithm, the terminal device may generate the security key based on the first key and a third derivative parameter. The third derivative parameter may be the identifier of the security algorithm. For detailed descriptions of generating the security key, refer to the descriptions of generating the security key based on the first key and the third derivative parameter in step 204, step 208, and step 305. Details are not described herein again.

In this case, the terminal device may protect user plane data by using the first security context and the second security context. The first security context and the second security context may be respectively for protecting a private network service (public network data) and a public network service (private network data). When an attacker obtains one security context, the other security context is not exposed because the two security contexts are different. In this way, an objective of separately protecting the public network service and the private network service can be achieved, and security of a communication service can be improved.

It should be understood that a data transmission network element is the access network device in this embodiment.

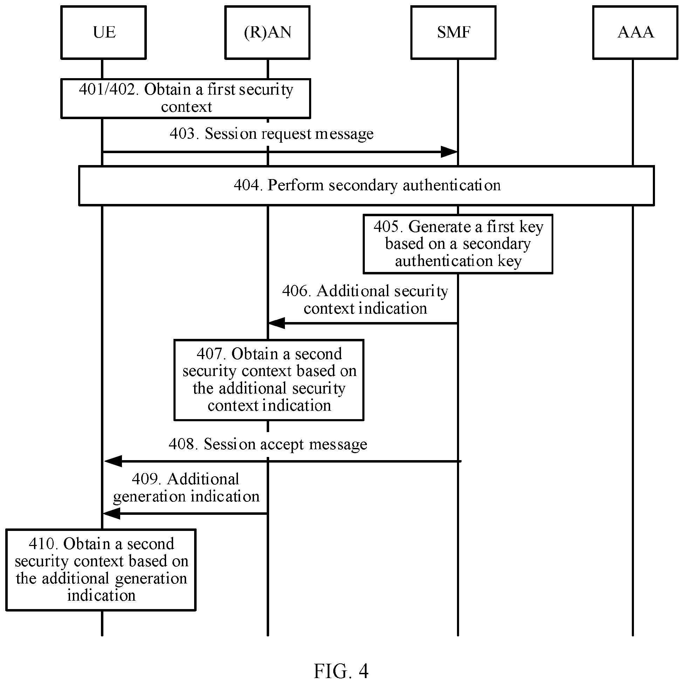

Based on the foregoing network architecture, refer to FIG. 4. FIG. 4 is a schematic flowchart of still another security context generation method according to an embodiment of the present invention. As shown in FIG. 4, the security context generation method may include the following steps.

401. A terminal device obtains a first security context.

For detailed descriptions of step 401, refer to the descriptions of step 201. Details are not described herein again.

402. An access network device obtains a first security context

For detailed descriptions of step 402, refer to the descriptions of step 201. Details are not described herein again.

403. The terminal device sends a session request message to a session management function network element.

For detailed descriptions of step 403, refer to the descriptions of step 202. Details are not described herein again.

404. The terminal device performs secondary authentication.

The session management function network element may trigger, based on a DNN and/or subscription information of the terminal device that are/is carried in the session request message, secondary authentication between the terminal device and an authentication, authorization, and accounting network element. The subscription information of the terminal device may be obtained by requesting a UDM. For example, when the DNN is a specific DNN, or the subscription information of the terminal device indicates that secondary authentication needs to be triggered, the session management function network element may trigger secondary authentication.

The terminal device may obtain a secondary authentication key through secondary authentication. The secondary authentication may be implemented based on an extensible authentication protocol (extensible authentication protocol, EAP). The terminal device and the authentication, authorization, and accounting network element may generate the secondary authentication key. The secondary authentication key may be a master session key (master session key, MSK) or an extended master session key (extended master session key, EMSK).

For a secondary authentication process, refer to 3GPP TS 33.501 and RFC 3748.

After the authentication, authorization, and accounting network element completes secondary authentication, the authentication, authorization, and accounting network element may send the secondary authentication key to the session management function network element. Correspondingly, the session management function network element may receive the secondary authentication key from the authentication, authorization, and accounting network element.

405. The session management function network element generates a first key based on the secondary authentication key.

The session management function network element may first determine whether a second security context needs to be generated. For detailed descriptions, refer to the descriptions in step 203 in which the session management function network element determines whether the terminal device needs to generate the second security context. Details are not described herein again.

When the session management function network element determines that the second security context needs to be generated, the session management function network element may determine a security algorithm. For detailed descriptions of a process in which the session management function network element determines that the security algorithm is generated, refer to the related descriptions in step 203. Details are not described herein again.

When the session management function network element determines that the second security context needs to be generated, the session management function network element may generate the first key based on the secondary authentication key. The session management function network element may generate the first key based on a second derivative parameter and the secondary authentication key. For detailed descriptions of a generation process, refer to the related descriptions of step 203. Details are not described herein again.

406. The session management function network element sends an additional security context indication to the access network device.

For detailed descriptions of step 406, refer to the descriptions of step 203. Details are not described herein again.

It should be noted that, the additional security context indication may include at least the first key.

It should be understood that, when the session management function network element has determined the security algorithm, the additional security context indication may further include an identifier of the security algorithm.

407. The access network device obtains a second security context based on the additional security context indication.

After receiving the additional security context indication from the session management function network element, the access network device may obtain the second security context based on the additional security context indication. For detailed descriptions of generating the second security context, refer to the descriptions of step 204.

The access network device may obtain the security algorithm based on the additional security context indication.

In a possible implementation, when the additional security context indication supports generation of the second security context, the access network device may obtain the security algorithm based on an algorithm priority list. For detailed descriptions, refer to the related descriptions of step 204. Details are not described herein again.

In another possible implementation, the additional security context indication may include the identifier of the security algorithm, and the access network device may determine the security algorithm based on the identifier. The security algorithm may be determined by the session management function network element. For detailed descriptions, refer to the corresponding descriptions of step 203 and step 204. Details are not described herein again.

In still another possible implementation, the access network device may obtain the security algorithm from a first security algorithm of the first security context based on the additional security context indication.

The access network device may generate a first key based on the additional security context indication.

The additional security context indication may include the first key, and the access network device may directly obtain the first key. For detailed descriptions, refer to the related descriptions of step 204. Details are not described herein again.

Further, the access network device may generate a security key based on the additional security context indication and the first key.

The access network device may generate the security key based on the first key and a third derivative parameter. For detailed descriptions of generating the security key, refer to the related descriptions of step 204. Details are not described herein again.

408. The session management function network element sends a session accept message to the terminal device.

For detailed descriptions of step 408, refer to the descriptions of step 206. Details are not described herein again.

The session accept message may include an additional generation indication, and the additional generation indication may include an indication of the second derivative parameter and/or the identifier of the security algorithm.

409. The access network device sends the additional generation indication to the terminal device.

Correspondingly, the terminal device receives the additional generation indication from the session management function network element. For detailed descriptions of step 409, refer to the descriptions of step 205 and step 207.

It should be noted that the additional generation indication may include one or more of the following: an explicit indication and the identifier of the security algorithm.

It should be understood that, one of the messages in step 408 and step 409 includes the identifier of the security algorithm.

410. The terminal device obtains a second security context based on the additional generation indication.

For detailed descriptions of step 410, refer to the descriptions of step 407 and step 208.

The additional generation indication may include the identifier of the security algorithm, and the terminal device may determine the security algorithm based on the identifier. If the additional generation indication does not include the identifier of the security algorithm, the terminal device may obtain the security algorithm based on the first security algorithm in the first security context. For detailed descriptions, refer to the related descriptions of step 407 and step 208. Details are not described herein again.

The terminal device may generate a first key based on the additional generation indication.

The additional generation indication may include the indication of the second derivative parameter, and the indication of the second derivative parameter may indicate the terminal device to obtain the first key based on the second derivative parameter. The terminal device may generate the first key based on the secondary authentication key and the second derivative parameter. For detailed descriptions, refer to the related descriptions of step 203, step 208, and step 407. Details are not described herein again.

Further, the terminal device may generate a security key based on the additional generation indication and the first key.

When the additional generation indication includes the identifier of the security algorithm, the terminal device may generate the security key based on the first key and a third derivative parameter. For detailed descriptions of generating the security key, refer to the descriptions of generating the security key based on the first key and the third derivative parameter in step 204, step 208, and step 407. Details are not described herein again.

In this case, the terminal device may protect user plane data by using the second security context and the first security context. The terminal device may obtain the second security context and the first security context. When the terminal device sends data (for example, private network data) corresponding to a PDU session, the terminal device may perform user plane security protection by using the second security context. When the terminal device sends data (for example, public network data) corresponding to a PDU session, the terminal device may perform user plane security protection by using the first security context. This can implement security isolation between the public network service and the public network service.

It should be understood that a data transmission network element is the access network device in this embodiment.

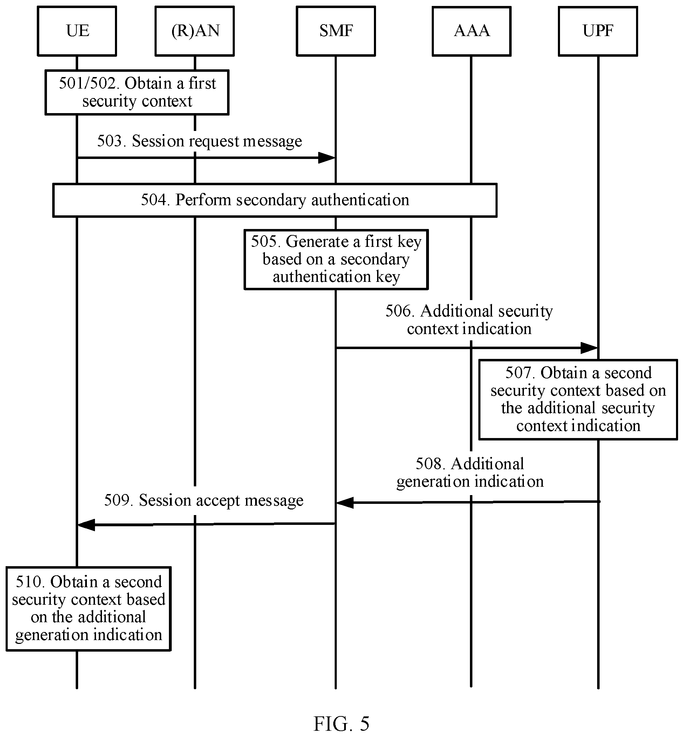

Based on the foregoing network architecture, refer to FIG. 5. FIG. 5 is a schematic flowchart of still another security context generation method according to an embodiment of the present invention. As shown in FIG. 5, the security context generation method may include the following steps.

501. A terminal device obtains a first security context.

502. An access network device obtains a first security context

503. The terminal device sends a session request message to a session management function network element.

504. The terminal device performs secondary authentication.

505. The session management function network element generates a first key based on the secondary authentication key.

For detailed descriptions of step 501 to step 505, refer to the descriptions of step 401 to step 405. Details are not described herein again.

506. The session management function network element sends an additional security context indication to a user plane function network element.

For detailed descriptions of step 506, refer to the related descriptions of step 203. Details are not described herein again.

It should be noted that, the additional security context indication may include at least the first key.

It should be understood that, when the session management function network element has determined a security algorithm, the additional security context indication may further include an identifier of the security algorithm.

507. The user plane function network element obtains a second security context based on the additional security context indication.

After receiving the additional security context indication from the session management function network element, the user plane function network element may generate the second security context based on the additional security context indication. For detailed descriptions of generating the second security context, refer to the descriptions of step 204.

The user plane function network element may obtain the security algorithm based on the additional security context indication.

In a possible implementation, when the additional security context indication supports generation of the second security context, the user plane function network element may obtain the security algorithm based on an algorithm priority list. For detailed descriptions, refer to the related descriptions of step 204. Details are not described herein again.

In another possible implementation, the additional security context indication may include the identifier of the security algorithm, and the user plane function network element may determine the security algorithm based on the identifier. The security algorithm may be determined by the session management function network element or the user plane function network element. For detailed descriptions, refer to the corresponding descriptions of step 203 and step 204. Details are not described herein again.

The user plane function network element may generate a first key based on the additional security context indication.

The additional security context indication may include the first key, and the user plane function network element may directly obtain the first key. For detailed descriptions, refer to the related descriptions of step 204. Details are not described herein again.

Further, the user plane function network element may generate a security key based on the additional security context indication and the first key.

The user plane function network element may generate the security key based on the first key and a third derivative parameter. For detailed descriptions of generating the security key, refer to the related descriptions of step 204. Details are not described herein again.

508. The user plane function network element sends an additional generation indication to the session management function network element.

The user plane function network element may send the additional generation indication to the session management function network element. Correspondingly, the session management function network element may receive the additional generation indication from the user plane function network element. The additional generation indication may include the identifier of the security algorithm. The additional generation indication may be encapsulated in an N4 session establishment response message.

For detailed descriptions of step 508, refer to the related descriptions of step 205 and step 207. Details are not described herein again.

It should be understood that, step 508 is an optional step.

509. The session management function network element sends a session accept message to the terminal device.

After receiving the additional generation indication from the user plane function network element, the session management function network element may encapsulate the received additional generation indication in the session accept message, and then send the session accept message to the terminal device. Correspondingly, the terminal device may receive the session accept message from the session management function network element.

It should be noted that, the session accept message may include an additional generation indication, and the additional generation indication may include one of more of the following: an indication of a second derivative parameter and the identifier of the security algorithm. The indication of the second derivative parameter may be from the session management function network element, and the identifier of the security algorithm may be from the user plane function network element, or may be from the session management function network element.

For detailed descriptions of step 509, refer to the related descriptions of step 205 to step 207. Details are not described herein again.

510. The terminal device obtains a second security context based on the additional generation indication.

The terminal device may obtain the second security context based on the additional generation indication. For detailed descriptions of step 510, refer to the descriptions of step 507 and step 208.

The terminal device may obtain a security algorithm based on the additional generation indication. The additional generation indication may include the identifier of the security algorithm, and the terminal device may determine the security algorithm based on the identifier of the security algorithm. If the additional generation indication does not include the identifier of the security algorithm, the terminal device may obtain the security algorithm based on the first security algorithm in the first security context. For detailed descriptions, refer to the related descriptions of step 508 and step 208. Details are not described herein again.

The terminal device may generate a first key based on the additional generation indication.

The additional generation indication may include the indication of the second derivative parameter, and the indication of the second derivative parameter may indicate the terminal device to obtain the first key based on the second derivative parameter. The terminal device may generate the first key based on the secondary authentication key and the second derivative parameter. For detailed descriptions, refer to the related descriptions of step 203, step 208, and step 507. Details are not described herein again.

Further, the terminal device may generate a security key based on the additional generation indication and the first key.

When the additional generation indication includes the identifier of the security algorithm, the terminal device may generate the security key based on the first key and a third derivative parameter. For detailed descriptions of generating the security key, refer to the descriptions of generating the security key based on the first key and the third derivative parameter in step 204, step 208, and step 507. Details are not described herein again.

In this case, the terminal device may protect user plane data by using the second security context and the first security context. The terminal device may obtain the second security context and the first security context. When sending data (for example, private network data) corresponding to a PDU session, the terminal device may perform user plane security protection by using the first security context, and the access network device performs de-protection. When the terminal device sends data (for example, public network data) corresponding to a PDU session, the terminal device may perform user plane security protection by using the second security context, and the user plane function network element performs de-protection. In this way, one security context is on the access network device, and the other security context is on the user plane function network element. The two security contexts have different algorithms and keys, and are in different entities. Therefore, security isolation can be implemented. The second security context may be generated by using the key generated by performing secondary authentication by the terminal device and the authentication, authorization, and accounting network element. The first security context may be generated by using a key generated by performing primary authentication by the terminal device and a unified data management network element (located in a public network). In this way, even if the key of the unified data management network element is obtained by an attacker, because the attacker does not obtain the key of the authentication, authorization, and accounting network element, the attacker cannot obtain the first key in the second security context, thereby further implementing isolation. In addition, it is assumed that the user plane function network element, the session management function network element, and the authentication, authorization, and accounting network element are all maintained by a private network, and an access network device, the access and mobility management function network element, and the like are maintained by the public network, the public network cannot obtain the first security context. Therefore, a problem that the private network and the public network do not trust each other can be resolved.

It should be understood that a data transmission network element in this embodiment is the user plane function network element.

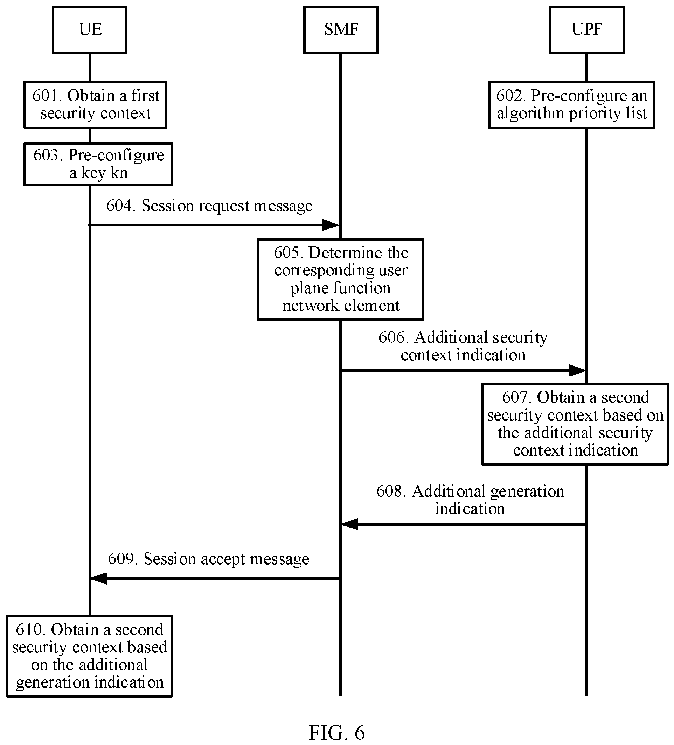

Based on the foregoing network architecture, refer to FIG. 6. FIG. 6 is a schematic flowchart of still another security context generation method according to an embodiment of the present invention. As shown in FIG. 6, the security context generation method may include the following steps.

601. A terminal device obtains a first security context.

For detailed descriptions of step 601, refer to the descriptions of step 201. Details are not described herein again.

602. A user plane function network element preconfigures a correspondence between an identifier of the terminal device and a root key Kn.

The user plane function network element may preconfigure the correspondence between the identifier of the terminal device and the root key Kn. The identifier of the terminal device may be a generic public subscription identifier (generic public subscription identifier, GPSI), or may be an internet protocol (internet protocol, IP) address. In other words, if the identifier of the terminal device is known, the user plane function network element may determine a first key based on the correspondence between the identifier of the terminal device and the root key Kn. For example, the user plane function network element may preconfigure a mapping relationship table between the identifier of the terminal device and the root key Kn, where one identifier may correspond to one root key Kn. It should be understood that the foregoing example is an example in which the user plane function network element may preconfigure the correspondence between the identifier of the terminal device and the root key Kn, and does not constitute a limitation.

After preconfiguring the correspondence between the identifier of the terminal device and the root key Kn, the user plane function network element may deliver the root key Kn to the corresponding terminal device.

For detailed descriptions of step 602, refer to the descriptions of step 205. Details are not described herein again.

603. The terminal device pre-configures the root key Kn.

604. The terminal device sends a session request message to a session management function network element.

For detailed descriptions of step 604, refer to the descriptions of step 202. Details are not described herein again.

It should be noted that the session request message may include the identifier of the terminal device.

605. The session management function network element determines the corresponding user plane function network element.

The session management function network element may first determine whether a second security context needs to be generated. For detailed descriptions, refer to the descriptions of step 203. Details are not described herein again.

The session management function network element may determine the user plane function network element. Optionally, the user plane function network element has the correspondence between the identifier of the terminal device and the root key Kn.

In a possible implementation, there is one user plane function network element corresponding to a DNN of the session request message. In other words, it may be determined that the user plane function network element is a network element that generates a corresponding second security context.

In another possible implementation, there are a plurality of user plane function network elements corresponding to a DNN of the session request message. The session management function network element may determine the user plane function network element by preconfiguring a correspondence between an identifier of a terminal device and a user plane function network element. Optionally, the session management function network element may alternatively obtain a context of a corresponding terminal device based on the session request message, determine an identifier of the terminal device based on the context of the terminal device, and then determine the user plane function network element based on a preconfigured correspondence between an identifier of a terminal device and a user plane function network element. It should be understood that the identifier of the terminal device may be carried in an SM message, or may be stored in a context of the session management function network element.

606. The session management function network element sends an additional security context indication to the user plane function network element.

For detailed descriptions of step 606, refer to the descriptions of step 203. Details are not described herein again.

It should be noted that the additional security context indication may include the identifier of the terminal device.

607. The user plane function network element obtains a second security context based on the additional security context indication.

After receiving the additional security context indication from the session management function network element, the user plane function network element may generate the second security context based on the additional security context indication. For detailed descriptions, refer to the descriptions of step 204.

The user plane function network element may obtain a security algorithm based on the additional security context indication. For detailed descriptions, refer to the descriptions of step 204. Details are not described herein again.

The user plane function network element may generate a first key based on the additional security context indication.

In a possible implementation, the user plane function network element may first determine the root key Kn based on the received identifier of the terminal device and the correspondence between the terminal device and the root key Kn. The user plane function network element may use the root key Kn as the first key.

In another possible implementation, after determining the root key Kn, the user plane function network element may generate the first key based on the root key Kn and a first derivative parameter. For descriptions of a specific generation manner, refer to the related descriptions of step 204. Details are not described herein again.

Further, the user plane function network element may generate a security key based on the additional security context indication and the first key.

The user plane function network element may generate the security key based on the first key and a third derivative parameter. For detailed descriptions of generating the security key, refer to the descriptions of generating the security key based on the first key and the third derivative parameter in step 204. Details are not described herein again.

608. The user plane function network element sends an additional generation indication to the session management function network element.

The user plane function network element may send the additional generation indication to the session management function network element. Correspondingly, the session management function network element may receive the additional generation indication from the user plane function network element.

For detailed descriptions of step 608, refer to the descriptions of step 205 and step 207. Details are not described herein again.

609. The session management function network element sends a session accept message to the terminal device.

After receiving the additional generation indication from the user plane function network element, the session management function network element may encapsulate the received additional generation indication in the session accept message, and then send the session accept message to the terminal device. Correspondingly, the terminal device may receive the session accept message from the session management function network element.

It should be noted that, the session accept message may include the additional generation indication, and the additional generation indication may include one of more of the following: an indication of the first derivative parameter, an indication of a second derivative parameter, and an identifier of the security algorithm. The indication of the first derivative parameter may be from the user plane function network element, the indication of the second derivative parameter may be from the session management function network element, and the identifier of the security algorithm may be from the user plane function network element, or may be from the session management function network element.

For detailed descriptions of step 609, refer to the descriptions of step 205 to step 207. Details are not described herein again.

610. The terminal device generates a second security context based on the additional generation indication.

The terminal device may obtain the second security context based on the additional generation indication. For detailed descriptions of step 610, refer to the descriptions of step 607 and step 208.

The terminal device may obtain a security algorithm based on the additional generation indication. The additional generation indication may include the identifier of the security algorithm, and the terminal device may determine the security algorithm based on the identifier of the security algorithm. For detailed descriptions, refer to the related descriptions of step 607 and step 208. Details are not described herein again.

The terminal device may generate a first key based on the additional generation indication. For detailed descriptions, refer to the related descriptions of step 607 and step 208. Details are not described herein again.

The terminal device may use the preconfigured root key Kn as the first key. For detailed descriptions, refer to the related descriptions of step 607 and step 208. Details are not described herein again.

The additional generation indication may include the indication of the first derivative parameter. The terminal device may generate the first key based on the root key Kn and the first derivative parameter.

Further, the terminal device may generate a security key based on the additional generation indication and the first key.

When the additional generation indication includes the identifier of the security algorithm, the terminal device may generate the security key based on the first key and a third derivative parameter. For detailed descriptions of generating the security key, refer to the descriptions of generating the security key based on the first key and the third derivative parameter in step 204, step 208, and step 607. Details are not described herein again.

It should be noted that when the second security context is generated, and the terminal device may generate the first key, the first key may be determined based on the Kn root key configured by the terminal device and the first derivative parameter.

In this case, the terminal device may protect user plane data by using the second security context and the first security context. The second security context is generated by using the Kn root key preconfigured on the terminal device and the user plane function network element. In the method embodiment corresponding to FIG. 5, the first security context is generated by using a key generated by performing primary authentication by the terminal device and the unified data management network element (located in the public network). In this way, even if the key of the unified data management network element is obtained by an attacker, because the attacker does not obtain the key of the user plane function network element, the attacker cannot obtain the key in the second security context, thereby further implementing security isolation. In addition, compared with the method embodiment corresponding to FIG. 5, this embodiment not only can implement the foregoing functions, but also can further reduce costs of a private network device.

It should be understood that a data transmission network element in this embodiment is the user plane function network element.

It should be understood that, in the foregoing security context generation methods, a function performed by the terminal device may also be performed by a module (for example, a chip) in the terminal device, a function performed by the session management function network element may also be performed by a module (for example, a chip) in the session management function network element, a function performed by the data transmission network element may also be performed by a module (for example, a chip) in the data transmission network element, a function performed by the user plane function network element may also be performed by a module (for example, a chip) in the user plane function network element, and a function performed by the access network device may also be performed by a module (for example, a chip) in the access network device.

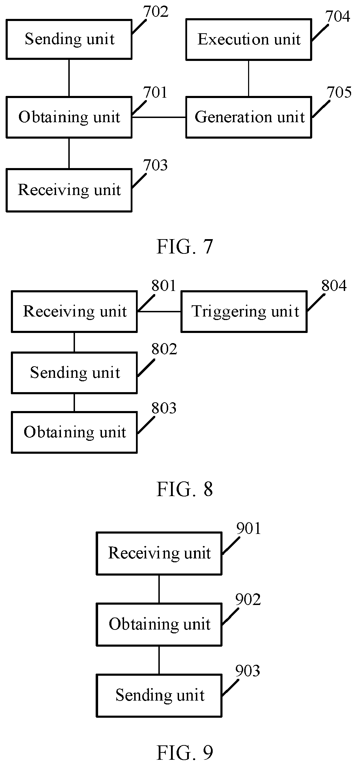

Based on the foregoing network architecture, refer to FIG. 7. FIG. 7 is a schematic diagram of a structure of a security context generation apparatus according to an embodiment of this application. As shown in FIG. 7, the apparatus may include an obtaining unit 701, a sending unit 702, and a receiving unit 703.

The obtaining unit 701 is configured to obtain a first security context, where the first security context is for protecting a first communication service of a terminal device.

The sending unit 702 is configured to send a session request message to a session management function network element, where the session request message is for requesting to establish a session of a second communication service, and the second communication service is different from the first communication service.

The receiving unit 703 is configured to receive a session accept message from the session management function network element, where the session accept message is for completing establishment of the session of the second communication service.

The obtaining unit 701 is further configured to obtain an additional generation indication.

The obtaining unit 701 is further configured to obtain a second security context based on the additional generation indication, where the second security context is for protecting the second communication service.

In a possible implementation, the session request message includes first indication information, and the first indication information indicates that the terminal device supports generation of the second security context.

In a possible implementation, that the obtaining unit 701 obtains a second security context based on the additional generation indication, where the second security context is for protecting the second communication service includes:
obtaining a security key based on the additional generation indication and a first key; and/or
obtaining a security algorithm based on the additional generation indication.

In a possible implementation, that the obtaining unit 701 obtains a security key based on the additional generation indication and a first key includes:
obtaining the first key based on the additional generation indication and an AS root key of the first security context; and
generating the security key based on the first key.

In a possible implementation, the additional generation indication includes an indication of a first derivative parameter, and that the obtaining unit 701 obtains the first key based on the additional generation indication and an AS root key of the first security context includes:
generating the first key based on the AS root key of the first security context and the first derivative parameter.

In a possible implementation, the first derivative parameter is a downlink PDCP count, and the indication of the first derivative parameter is some bits of the downlink PDCP count.

In a possible implementation, the apparatus may further include:
an execution unit 704, configured to perform secondary authentication; and
a generation unit 705, configured to generate a secondary authentication key in a process of performing the secondary authentication.

That the obtaining unit 701 obtains a security key based on the additional generation indication and a first key includes:
obtaining the first key based on the additional generation indication and the secondary authentication key; and
generating the security key based on the first key.

In a possible implementation, the additional generation indication includes an indication of a second derivative parameter, and that the obtaining unit 701 obtains the first key based on the additional generation indication and the secondary authentication key includes:
generating the first key based on the indication of the second derivative parameter, the secondary authentication key, and the second derivative parameter.

In a possible implementation, the second derivative parameter is one or more of the following parameters: a downlink NAS count, a PDU session ID, NSSAI, and a DNN.

In a possible implementation, that the obtaining unit 701 generates the security key based on the first key includes:
generating the security key based on the first key and a third derivative parameter.

In a possible implementation, the additional generation indication includes an identifier of the security algorithm, and that the obtaining unit 701 generates the security key based on the first key and a third derivative parameter includes:
generating the security key based on the first key and the identifier and a type of the security algorithm.

In a possible implementation, the additional generation indication includes an identifier of the security algorithm.

In a possible implementation, when the first communication service is a public network service, the second communication service is a private network service; and when the first communication service is a private network service, the second communication service is a public network service.

For more detailed descriptions of the obtaining unit 701, the sending unit 702, the receiving unit 703, the execution unit 704, and the generation unit 705, directly refer to the related descriptions of the terminal device in the method embodiments shown in FIG. 2 to FIG. 6. Details are not described herein again.

Based on the foregoing network architecture, refer to FIG. 8. FIG. 8 is a schematic diagram of a structure of another security context generation apparatus according to an embodiment of this application. As shown in FIG. 8, the apparatus may include:
a receiving unit 801, configured to receive a session request message to a terminal device, where the session request message is for requesting to establish a session of a second communication service; and
a sending unit 802, configured to send an additional security context indication to a data transmission network element, where the additional security context indication indicates that to generate a second security context, and the second security context is for protecting the second communication service.

The sending unit 802 is further configured to send a session accept message to the terminal device, where the session accept message is for completing establishment of the session of the second communication service.

In a possible implementation, the session request message includes first indication information and the first indication information indicates that the terminal device supports generation of the second security context. That the sending unit 802 sends an additional security context indication to a data transmission network element includes:
when the first indication information indicates that the terminal device supports generation of the second security context, sending the additional security context indication to the data transmission network element.

In a possible implementation, that the sending unit 802 sends the additional security context indication to the data transmission network element includes:
obtaining subscription information of the terminal device based on the session request message; and
when the subscription information of the terminal device indicates that the second security context needs to be generated, sending the additional security context indication to the data transmission network element.

In a possible implementation, that the sending unit 802 sends the additional security context indication to the data transmission network element includes:
when a local policy configured by a session management function network element indicates that the second security context needs to be generated, sending the additional security context indication to the data transmission network element.

In a possible implementation, the additional security context indication includes an identifier of a security algorithm, and the apparatus may further include an obtaining unit 803.

The obtaining unit 803 is configured to obtain the security algorithm.

In a possible implementation, the additional security context indication includes a first key, and the apparatus may further include:
a triggering unit 804, configured to trigger secondary authentication.

The receiving unit 801 is further configured to: after the secondary authentication succeeds, receive a secondary authentication key from an authentication, authorization, and accounting network element.

The obtaining unit 803 is configured to obtain the first key based on the secondary authentication key.

In a possible implementation, that the obtaining unit 803 is configured to obtain the first key based on the secondary authentication key includes:
obtaining the first key based on the secondary authentication key and a second derivative parameter.

In a possible implementation, the second derivative parameter is one or more of the following parameters: a downlink NAS count, a PDU session ID, NSSAI, and a DNN.

In a possible implementation, the session accept message includes an indication of the second derivative parameter, and the indication of the second derivative parameter indicates that a security key is obtained based on the secondary authentication key.

For more detailed descriptions of the receiving unit 801, the sending unit 802, the obtaining unit 803, and the triggering unit 804, directly refer to the related descriptions of the session management function network element in the method embodiments shown in FIG. 2 to FIG. 6. Details are not described herein again.

Based on the foregoing network architecture, refer to FIG. 9. FIG. 9 is a schematic diagram of a structure of still another security context generation apparatus according to an embodiment of this application. As shown in FIG. 9, the apparatus may include:
a receiving unit 901, configured to receive an additional security context indication from a session management function network element;
an obtaining unit 902, configured to obtain a second security context based on the additional security context indication, where the second security context is for protecting a second communication service; and
a sending unit 903, configured to send an additional generation indication to a terminal device, where the additional generation indication indicates to generate the second security context.

In a possible implementation, the obtaining unit 902 is specifically configured to:
obtain a security key based on the additional security context indication and a first key; and/or
obtain a security algorithm based on the additional security context indication.

In a possible implementation, the obtaining unit 902 is further configured to obtain a first security context before the additional security context indication is received from the session management function network element, where the first security context is for protecting a first communication service, and the first communication service is different from the second communication service.

In a possible implementation, that the obtaining unit 902 generates a security key based on the additional security context indication and a first key includes:
obtaining the first key based on the additional security context indication and an AS root key of the first security context; and
generating the security key based on the first key.

In a possible implementation, the additional generation indication includes an indication of a first derivative parameter and that the obtaining unit 902 obtains the first key based on the additional security context indication and an AS root key of the first security context includes:
generating the first key based on the AS root key of the first security context and the first derivative parameter.

In a possible implementation, the first derivative parameter is a downlink PDCP count, and the indication of the first derivative parameter is some bits of the downlink PDCP count.

In a possible implementation, the additional security context indication includes the first key, and that the obtaining unit 902 obtains a security key based on the additional security context indication and a first key includes:
generating the security key based on the first key.

In a possible implementation, that the obtaining unit 902 generates the security key based on the first key includes:
generating the security key based on the first key and a third derivative parameter.

In a possible implementation, the additional security context indication includes an identifier of the security algorithm and that the obtaining unit 902 generates the security key based on the first key and a third derivative parameter includes:
generating the security key based on the first key and the identifier and a type of the security algorithm.

In a possible implementation, the additional generation indication includes an identifier of the security algorithm.

In a possible implementation, the additional security context indication includes an identifier of the security algorithm.

In a possible implementation, that the obtaining unit 902 obtains a security algorithm based on the additional security context indication includes:
obtaining the security algorithm based on the additional security context indication, a security capability of the terminal device, and a preconfigured algorithm priority list, where the security capability of the terminal device indicates all security algorithms supported by the terminal device.

In a possible implementation, when the first communication service is a public network service, the second communication service is a private network service; and when the first communication service is a private network service, the second communication service is a public network service.

For more detailed descriptions of the receiving unit 901, the obtaining unit 902, and the sending unit 903, directly refer to the related descriptions of the data transmission network element in the method embodiments shown in FIG. 2 to FIG. 6. Details are not described herein again.

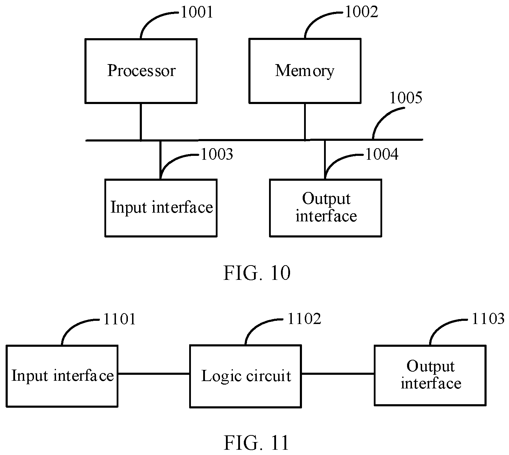

Based on the foregoing network architecture, refer to FIG. 10. FIG. 10 is a schematic diagram of a structure of still another security context generation apparatus according to an embodiment of this application. As shown in FIG. 10, the security context generation apparatus may include a processor 1001, a memory 1002, an input interface 1003, an output interface 1004, and a bus 1005. The memory 1002 may exist independently, and may be connected to the processor 1001 through the bus 1005. Alternatively, the memory 1002 may be integrated with the processor 1001. The bus 1005 is configured to connect these components.

In an embodiment, the security context generation apparatus may be a terminal device or a module (for example, a chip) in the terminal device. When computer program instructions stored in the memory 1002 are executed, the processor 1001 is configured to control the sending unit 702 and the receiving unit 703 to perform the operations performed in the foregoing embodiment. The processor 1001 is further configured to perform the operations performed by the obtaining unit 701, the execution unit 704, and the generation unit 705 in the foregoing embodiment. The input interface 1003 is configured to perform the operation performed by the receiving unit 703 in the foregoing embodiment. The output interface 1004 is configured to perform the operation performed by the sending unit 702 in the foregoing embodiment. The terminal device or the module in the terminal device may be further configured to perform various methods performed by the terminal device in the method embodiments in FIG. 2 to FIG. 6. Details are not described again.

In an embodiment, the security context generation apparatus may be a session management function network element or a module (for example, a chip) in the session management function network element. When computer program instructions stored in the memory 1002 are executed, the processor 1001 is configured to control the receiving unit 801 and the sending unit 803 to perform the operations performed in the foregoing embodiment. The processor 1001 is further configured to perform the operations performed by the obtaining unit 803 and the triggering unit 804 in the foregoing embodiment. The input interface 1003 is configured to perform the operation performed by the receiving unit 801 in the foregoing embodiment. The output interface 1004 is configured to perform the operation performed by the sending unit 802 in the foregoing embodiment. The session management function network element or the module in the session management function network element may be further configured to perform various methods performed by the session management function network element in the method embodiments in FIG. 2 to FIG. 6. Details are not described again.

In an embodiment, the security context generation apparatus may be a data transmission network element or a module (for example, a chip) in the data transmission network element. When computer program instructions stored in the memory 1002 are executed, the processor 1001 is configured to control the receiving unit 901 and the sending unit 903 to perform the operations performed in the foregoing embodiment. The processor 1001 is further configured to perform the operations performed by the obtaining unit 902 in the foregoing embodiment. The input interface 1003 is configured to perform the operation performed by the receiving unit 901 in the foregoing embodiment. The output interface 1004 is configured to perform the operation performed by the sending unit 903 in the foregoing embodiment. The data transmission network element or the module in the data transmission network element may be further configured to perform various methods performed by the data transmission network element in the method embodiments in FIG. 2 to FIG. 6. Details are not described again.

Based on the foregoing network architecture, refer to FIG. 11. FIG. 11 is a schematic diagram of a structure of still another security context generation apparatus according to an embodiment of this application. As shown in FIG. 11, the security context generation apparatus may include an input interface 1101, a logic circuit 1102, and an output interface 1103. The input interface 1101 is connected to the output interface 1103 through the logic circuit 1102. The input interface 1101 is configured to receive information from another apparatus, and the output interface 1103 is configured to output, schedule, or send information to the another apparatus. The logic circuit 1102 is configured to perform an operation other than operations of the input interface 1101 and the output interface 1103, for example, implement a function implemented by the processor 1001 in the foregoing embodiment. The security context generation apparatus may be a terminal device or a module in the terminal device, may be a session management function network element or a module in the session management function network element, or may be a data transmission network element or a module in the data transmission network element. For more detailed descriptions of the input interface 1101, the logic circuit 1102, and the output interface 1103, directly refer to related descriptions of the terminal device, the session management function network element, and the data transmission network element in the foregoing method embodiments. Details are not described herein again.

An embodiment of this application further discloses a computer-readable storage medium storing instructions. When the instructions are executed, the method in the foregoing method embodiments is performed.

An embodiment of this application further discloses a computer program product including instructions. When the instructions are executed, the method in the foregoing method embodiments is performed.

An embodiment of this application further discloses a communication system. The communication system includes a terminal device, a session management function network element, and a data transmission network element. For specific descriptions, refer to the security context generation methods shown in FIG. 2 to FIG. 6.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A security context generation method, comprising:
obtaining, by a terminal device, a first security context, wherein the first security context is for protecting a first communication service of the terminal device;
sending, by the terminal device, a session request message to a session management function network element, wherein the session request message is for requesting to establish a session of a second communication service, and the second communication service is different from the first communication service;
receiving, by the terminal device, a session accept message from the session management function network element, wherein the session accept message is for completing establishment of the session of the second communication service;
obtaining, by the terminal device, an additional generation indication; and
obtaining, by the terminal device, a second security context based on the additional generation indication, wherein the second security context is for protecting the second communication service.

2. The method according to claim 1, wherein the session request message comprises first indication information, and the first indication information indicates that the terminal device supports generation of the second security context.

3. The method according to claim 1 or 2, wherein the obtaining, by the terminal device, a second security context based on the additional generation indication comprises:
obtaining, by the terminal device, a security key based on the additional generation indication and a first key; and/or
obtaining, by the terminal device, a security algorithm based on the additional generation indication.

4. The method according to claim 3, wherein the obtaining, by the terminal device, a security key based on the additional generation indication and a first key comprises:
obtaining, by the terminal device, the first key based on the additional generation indication and an access stratum AS root key of the first security context; and
generating, by the terminal device, the security key based on the first key.

5. The method according to claim 4, wherein the additional generation indication comprises an indication of a first derivative parameter, and the obtaining, by the terminal device, the first key based on the additional generation indication and an AS root key of the first security context comprises:
generating, by the terminal device, the first key based on the AS root key of the first security context and the first derivative parameter.

6. The method according to claim 5, wherein the first derivative parameter is a downlink packet data convergence protocol PDCP count, and the indication of the first derivative parameter is some bits of the downlink PDCP count.

7. The method according to claim 3, wherein after the sending, by the terminal device, a session request message to a session management function network element, and before the receiving, by the terminal device, an additional generation indication, the method further comprises:
performing, by the terminal device, secondary authentication; and
generating, by the terminal device, a secondary authentication key in a process of performing the secondary authentication; and
the obtaining, by the terminal device, a security key based on the additional generation indication and a first key comprises:
obtaining, by the terminal device, the first key based on the additional generation indication and the secondary authentication key; and
generating, by the terminal device, the security key based on the first key.

8. The method according to claim 7, wherein the additional generation indication comprises an indication of a second derivative parameter, and the obtaining, by the terminal device, the first key based on the additional generation indication and the secondary authentication key comprises:
generating, by the terminal device, the first key based on the indication of the second derivative parameter, the secondary authentication key, and the second derivative parameter.

9. The method according to claim 8, wherein the second derivative parameter is one or more of the following parameters: a downlink non-access stratum NAS count, a protocol data unit session identity PDU session ID, network slice selection assistance information NSSAI, and a data network name DNN.

10. The method according to any one of claims 4 to 9, wherein the generating, by the terminal device, the security key based on the first key comprises:
generating, by the terminal device, the security key based on the first key and a third derivative parameter.

11. The method according to claim 10, wherein the additional generation indication comprises an identifier of the security algorithm, and the generating, by the terminal device, the security key based on the first key and a third derivative parameter comprises:
generating, by the terminal device, the security key based on the first key and the identifier and a type of the security algorithm.

12. The method according to claim 3, wherein the additional generation indication comprises an identifier of the security algorithm.

13. The method according to any one of claims 1 to 12, wherein when the first communication service is a public network service, the second communication service is a private network service; and when the first communication service is a private network service, the second communication service is a public network service.

14. A security context generation apparatus, wherein the apparatus is a terminal device, and the apparatus comprises:
an obtaining unit, configured to obtain a first security context, wherein the first security context is for protecting a first communication service of the terminal device;
a sending unit, configured to send a session request message to a session management function network element, wherein the session request message is for requesting to establish a session of a second communication service, and the second communication service is different from the first communication service; and
a receiving unit, configured to receive a session accept message from the session management function network element, wherein the session accept message is for completing establishment of the session of the second communication service, wherein
the obtaining unit is further configured to obtain an additional generation indication; and
the obtaining unit is further configured to obtain a second security context based on the additional generation indication, wherein the second security context is for protecting the second communication service.

15. The apparatus according to claim 14, wherein the session request message comprises first indication information, and the first indication information indicates that the terminal device supports generation of the second security context.

16. The apparatus according to claim 14 or 15, wherein that the obtaining unit obtains a second security context based on the additional generation indication, wherein the second security context is for protecting the second communication service comprises:
obtaining a security key based on the additional generation indication and a first key; and/or
obtaining a security algorithm based on the additional generation indication.

17. The apparatus according to claim 16, wherein that the obtaining unit obtains a security key based on the additional generation indication and a first key comprises:
obtaining the first key based on the additional generation indication and an AS root key of the first security context; and
generating the security key based on the first key.

18. The apparatus according to claim 17, wherein the additional generation indication comprises an indication of a first derivative parameter, and that the obtaining unit obtains the first key based on the additional generation indication and an AS root key of the first security context comprises:
generating the first key based on the AS root key of the first security context and the first derivative parameter.

19. The apparatus according to claim 18, wherein the first derivative parameter is a downlink packet data convergence protocol PDCP count, and the indication of the first derivative parameter is some bits of the downlink PDCP count.

20. The apparatus according to claim 16, wherein the apparatus further comprises:
an execution unit, configured to perform secondary authentication; and
a generation unit, configured to generate a secondary authentication key in a process of performing the secondary authentication; and
that the obtaining unit obtains a security key based on the additional generation indication and a first key comprises:
obtaining the first key based on the additional generation indication and the secondary authentication key; and
generating the security key based on the first key.

21. The apparatus according to claim 20, wherein the additional generation indication comprises an indication of a second derivative parameter, and that the obtaining unit obtains the first key based on the additional generation indication and the secondary authentication key comprises:
generating the first key based on the indication of the second derivative parameter, the secondary authentication key, and the second derivative parameter.

22. The apparatus according to claim 21, wherein the second derivative parameter is one or more of the following parameters: a downlink non-access stratum NAS count, a protocol data unit session identity PDU session ID, network slice selection assistance information NSSAI, and a data network name DNN.

23. The apparatus according to any one of claims 17 to 22, wherein that the obtaining unit generates the security key based on the first key comprises:
generating the security key based on the first key and a third derivative parameter.

24. The apparatus according to claim 23, wherein the additional generation indication comprises an identifier of the security algorithm, and that the generation unit generates the security key based on the first key and a third derivative parameter comprises:
generating the security key based on the first key and the identifier and a type of the security algorithm.

25. The apparatus according to claim 16, wherein the additional generation indication comprises an identifier of the security algorithm.

26. The apparatus according to any one of claims 16 to 25, wherein when the first communication service is a public network service, the second communication service is a private network service; and when the first communication service is a private network service, the second communication service is a public network service.

27. A security context generation apparatus, comprising a processor, a memory, an input interface, and an output interface, wherein the input interface is configured to receive information from another security context generation apparatus than the security context generation apparatus, the output interface is configured to output information to the another security context generation apparatus than the security context generation apparatus, and the processor invokes a computer program stored in the memory to implement the method according to any one of claims 1 to 13.

28. A computer-readable storage medium, wherein the computer-readable storage medium stores a computer program or computer instructions; and when the computer program or the computer instructions are run, the method according to any one of claims 1 to 13 is implemented.

29. A chip, comprising a processor, configured to execute a program stored in a memory, wherein when the program is executed, the chip is enabled to perform the method according to any one of claims 1 to 13.
